# EUROPEAN PATENT SPECIFICATION

(11) **EP 2 364 897 B1**
(45) Date of publication and mention of the grant of the patent: **21.09.2016**
(21) Application number: 11155812.8
(22) Date of filing: 24.02.2011
(51) Int. Cl.: B62D 5/04

(54) **Electric power steering controller and electric power steering system**
Steuersystem für elektrische Servolenkung und elektrisches Servolenksystem
Contrôleur de direction assistée électrique et système de direction assistée électrique

(30) Priority: 08.03.2010 JP 2010050993
(43) Date of publication of application: 14.09.2011
(73) Proprietor: Hitachi Automotive Systems, Ltd., Hitachinaka-shi Ibaraki 312-8503 (JP)
(72) Inventor: Kanekawa, Nobuyasu, Chiyoda-ku, Tokyo 100-8220 (JP); Kobayashi, Ryoichi, Ibaraki 312-8503 (JP); Koseki, Tomonobu, Ibaraki 312-8503 (JP)
(74) Representative: MERH-IP Matias Erny Reichl Hoffmann Patentanwälte PartG mbB

(56) References cited:
- EP-A1- 1 512 609
- EP-A2- 0 984 256
- DE-A1- 10 037 693

## Description

### BACKGROUND OF THE INVENTION

### 1. Field of the Invention

The present invention relates to electric power steering controllers and electric power steering systems in general and particularly to an electric power steering controller and an electric power steering system effective in detecting failures of a main microcomputer that controls electric power steering.

### 2. Description of the Related Art

A widely used method for detecting failures of a main microcomputer involves the use of a monitoring microcomputer, thereby allowing a cross-check between the two microcomputers.

Another common method is to make a main microcomputer dually redundant for comparison between two outputs.

It is also possible for a microcomputer to perform a self-check by configuring its logic circuits and datapath with redundant code logic such as parity and error detection and correction codes or by providing the microcomputer with an inspection circuit.

Further, a method is known in which a torque sensor is used to detect abnormalities of a main microcomputer (see JP-2005-315840-A). Under this method, the torque sensor detects an abnormality of the main microcomputer when the torque sensor detects excessive torque. A power steering system uses power to provide steering assistance to the driver. If the system should operate against the will of the driver due to a system failure, the driver would attempt to resist this by applying a larger steering force (torque) to the steering wheel than usual. Thus, the method of JP-2005-315840-A uses the torque sensor to detect an excessive steering force during failure of the power steering system. After the detection, the system stops the steering assistance, thereby achieving fail-safe operation. The method of JP-2005-315840-A can detect not only abnormalities of the main microcomputer but abnormalities of an inverter predriver and an inverter and bugs of control software as well.

DE 100 37 693 A1 relates to an electric power steering controller and electric power steering system comprising a torque sensor for detecting a steering torque and a controller for outputting motor drive signals to an electric motor for applying a steering support torque to a steering system.

### SUMMARY OF THE INVENTION

The above method involving a cross-check between two microcomputers, however, still requires an increase in failure detection coverage. This requires the monitoring microcomputer to execute further advanced programs more frequently, which means that a higher-performance or more expensive monitoring microcomputer is necessary.

Also, the above method of making a main microcomputer dually redundant leads to a cost increase, requiring cost reductions for achieving the redundant configuration.

Further, the above method of configuring a main microcomputer with redundant code logic is time-consuming and costly because a new logic needs to be developed for the main microcomputer.

As stated above, under the method of JP-2005-315840-A, abnormalities of a main microcomputer can be detected with the use of a torque sensor. This method can avoid cost increases because the use of a monitoring microcomputer or a dually redundant microcomputer is not necessary.

Nevertheless, the method of JP-2005-315840-A still requires consideration of how to deal with failures of the torque sensor, which detects the steering force exerted by the driver. If abnormalities of the torque sensor cannot be detected, an abnormality of the torque sensor may be misjudged as an abnormality of the main microcomputer. Because a power steering system requires different operations for torque-sensor abnormalities and main-microcomputer abnormalities, it has to distinguish between them.

An object of the present invention is thus to provide an electric power steering controller and an electric power steering system that allow appropriate system control even when the operation of a torque sensor is abnormal.

To solve the above problems, one preferred mode of the present invention is as follows:

An electric power steering controller comprising: a main microcomputer including: a controller for outputting motor drive signals to a drive circuit based on first and second torque signals, the drive circuit being adapted to drive a motor that generates assistive torque, the first and second torque signals being output from at least one torque sensor used to detect steering force; and/or a torque sensor abnormality detector for detecting an abnormality of the torque sensor based on the first and second torque signals; and/or an external device provided as a discrete unit from the main microcomputer, the external device including an excessive torque detector for detecting excessive torque using either one of the first and second torque signals and/or for outputting a motor stop signal when the used signal is indicative of a torque larger than a threshold value.

An electric power steering controller and an electric power steering system according to the invention allow appropriate system control even when the operation of a torque sensor is abnormal.

### BRIEF DESCRIPTION OF THE DRAWINGS

FIG. 1 is a block diagram illustrating the configuration of an electric power steering system having an electric power steering controller according to a first example which is useful for understanding the invention;
FIG. 2 is a block diagram illustrating the configuration of a torque sensor used for the power steering system of the first example;
FIG. 3 is a graph illustrating the output characteristics of the torque sensor used for the power steering system of the first example;
FIG. 4 is a block diagram illustrating an alternative configuration of the torque sensor used for the power steering system of the first example;
FIG. 5 is a block diagram illustrating an alternative configuration of the torque sensor used for the power steering system of the first example;
FIG. 6 is a graph illustrating an abnormal region(s) detected by each component of an external device used for the power steering controller of the first example;
FIG. 7 is a graph illustrating abnormal regions detected by the external device used for the power steering controller of the first example;
FIG. 8 is a graph illustrating abnormal regions detected by the external device used for the power steering controller of the first example;
FIG. 9 is a graph illustrating abnormal regions detected by the external device used for the power steering controller of the first example;
FIG. 10 is a flowchart of the detection performed by a torque sensor abnormality detector used for the power steering controller of the first example;
FIG. 11 is a graph illustrating abnormal regions detected by the torque sensor abnormality detector used for the power steering controller of the first example;
FIG. 12 is a diagram listing the detections performed by the torque sensor abnormality detector and by the components of the external device of the electric power steering controller of the first example;
FIG. 13 is a block diagram illustrating an alternative configuration of the electric power steering system having the electric power steering controller of the first example;
FIG. 14 is a block diagram illustrating the configuration of an electric power steering system having an electric power steering controller according to a second example which is useful for understanding the invention;
FIG. 15 is a flowchart of the detection performed by a torque sensor abnormality detector used for the power steering controller of the second example;
FIG. 16 is a flowchart of the detection performed by an excessive torque detector used for the power steering controller of the second example;
FIG. 17 is a graph illustrating abnormal regions detected by the power steering controller of the second example;
FIG. 18 is a block diagram illustrating the configuration of an electric power steering system having an electric power steering controller according to a third example which is useful for understanding the invention;
FIG. 19 is a graph illustrating abnormal regions detected by the power steering controller of the third example;
FIG. 20 is a block diagram illustrating the configuration of an electric power steering system having an electric power steering controller according to a fourth example which is useful for understanding the invention;
FIG. 21 is a graph illustrating abnormal regions detected by the power steering controller of the fourth example;
FIG. 22 is a block diagram illustrating the configuration of an electric power steering system having an electric power steering controller according to a fifth example which is useful for understanding the invention;
FIG. 23 is a flowchart of the detection performed by an excessive torque detector used for the power steering controller of the fifth example;
FIG. 24 is a graph illustrating abnormal regions detected by the power steering controller of the fifth example;
FIG. 25 is a block diagram illustrating the configuration of an electric power steering system having an electric power steering controller according to a sixth example which is useful for understanding the invention;
FIG. 26 is a block diagram illustrating the configuration of an electric power steering system having an electric power steering controller according to a seventh example which is useful for understanding the invention;
FIG. 27 is a block diagram illustrating the configuration of an electric power steering system having an electric power steering controller according to Embodiment 1 of the invention;
FIG. 28 is a block diagram illustrating the configuration of an electric power steering system having an electric power steering controller according to Embodiment 2 of the invention;
FIG. 29 is a timing chart illustrating the operation of the power steering controller of Embodiment 2;
FIG. 30 is a block diagram illustrating the configuration of an electric power steering system having an electric power steering controller according to an eighth example which is useful for understanding the invention;
FIG. 31 is a block diagram illustrating the configuration of an electric power steering system having an electric power steering controller according to a ninth example which is useful for understanding the invention; and
FIG. 32 is a block diagram illustrating the configuration of an electric power steering system having an electric power steering controller according to a tenth example which is useful for understanding the invention.

### DETAILED DESCRIPTION OF EXAMPLES AND THE PREFERRED EMBODIMENTS

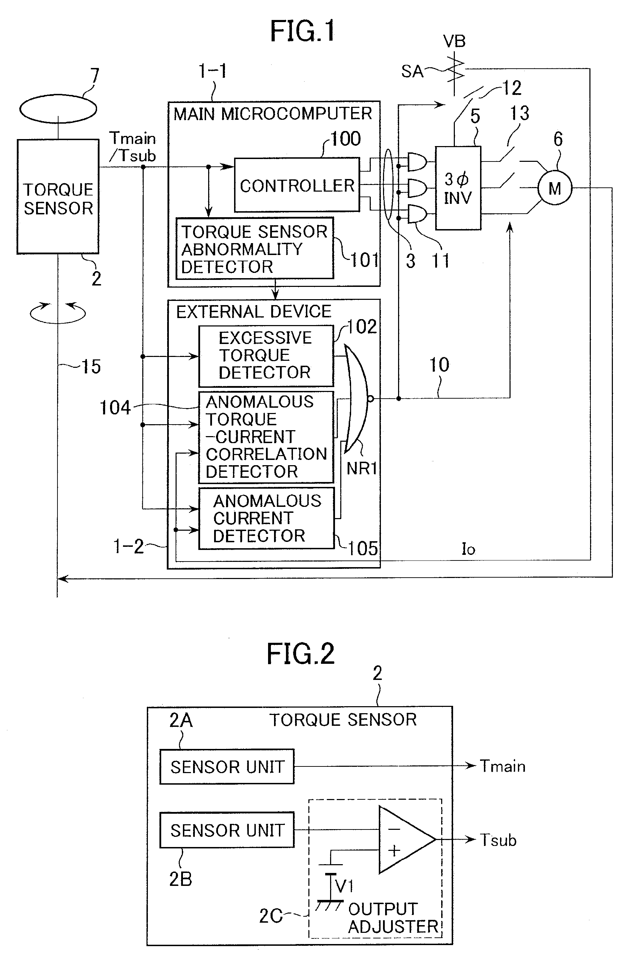

Described now with reference to FIGS. 1 through 13 is the configuration and operation of an electric power steering controller according to a first example which is useful for understanding the invention. First described with reference to FIG. 1 is the configuration of an electric power steering system incorporating the power steering controller of the first example. FIG. 1 is a block diagram of that system.

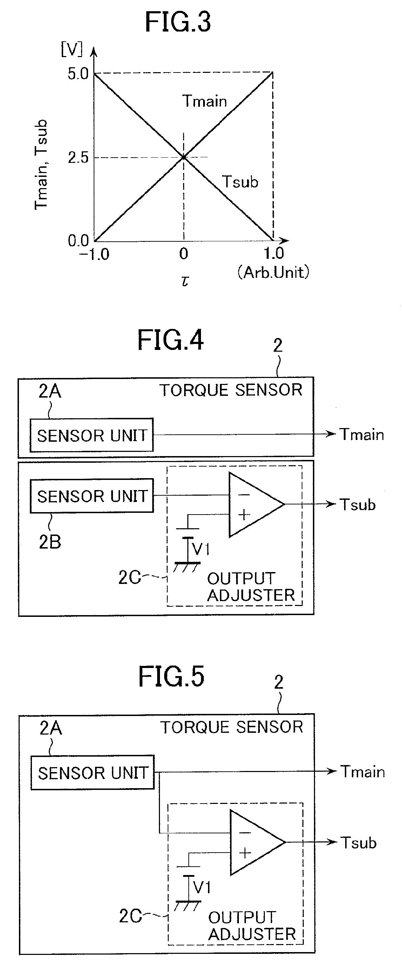

A steering wheel 7 and a torque sensor 2 are connected by a steering shaft 15. The torque sensor 2 is designed to detect the steering force (torque) exerted by the driver and output a first torque signal Tmain and a second torque signal Tsub, both of which represent the steering force. These signals Tmain and Tsub will later be described in detail with reference to FIG. 3. The torque sensor 2 will also be described later with reference to FIGS. 2, 4, and 5.

The two torque signals Tmain and Tsub are input to a main microcomputer 1-1 and also to an external device 1-2.

The main microcomputer 1-1 includes a controller 100 and a torque sensor abnormality detector 101.

The controller 100 outputs motor drive signals 3 to a three-phase inverter 5 based on the first torque signal Tmain or the second torque signal Tsub and on a magnetic pole signal detected by a magnetic pole sensor installed in a motor 6. The motor 6 is implemented by a three-phase synchronous motor. Thus, the motor drive signals 3 comprises six such signals although FIG. 1 depicts, for simplification purposes, the controller 100 as transmitting only three motor drive signals 3 to the three-phase inverter 5. This is because the three-phase inverter 5 includes, for each phase, a pair of an upper arm and a lower arm, each of the arms having a switch.

The three-phase inverter 5 (drive circuit) supplies drive current to the motor 6 in response to the motor drive signals 3 received from the main microcomputer 1-1. The motor 6 applies assistive torque to the steering shaft 15. This output of the motor 6 is transmitted to the steering shaft 15 via a decelerator not illustrated. The above summarizes the basic configuration and operation of the power steering system.

Note that the motor 6 may instead be a DC motor. In that case, the three-phase inverter 5 is replaced by a DC drive circuit for feeding direct current to the DC motor in response to the motor drive signals 3.

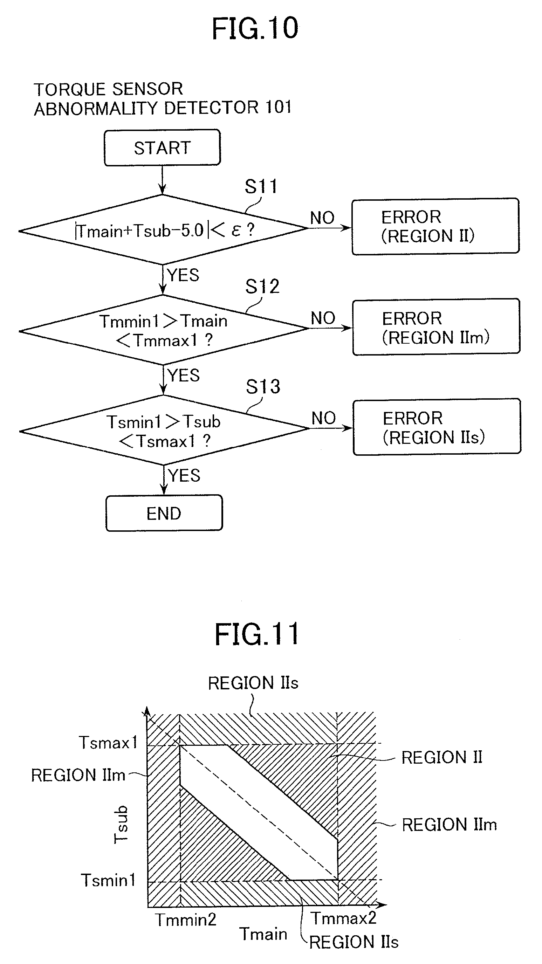

As stated above, the main microcomputer 1-1 includes the torque sensor abnormality detector 101. This detector 101 detects an abnormality of the torque sensor 2 by obtaining the difference between the first torque signal Tmain and the second torque signal Tsub. The operation of the torque sensor abnormality detector 101 will later be described with reference to FIGS. 10 and 11.

Described with reference now to FIGS. 2 and 3 is the configuration of the torque sensor 2. FIG. 2 is a block diagram illustrating the configuration of the torque sensor 2 used for the power steering system of the first example. FIG. 3 is a graph illustrating the output characteristics of the torque sensor 2.

As illustrated in FIG. 2, the torque sensor 2 includes a first sensor unit 2A, a second sensor unit 2B, and an output adjuster 2C. The first sensor unit 2A outputs the first torque signal Tmain the voltage of which is shown in FIG. 3. When the steering force τ (torque) exerted by the driver is zero, the first sensor unit 2A outputs a voltage of 2.5 V. As the steering force τ increases up to a relative value of 1.0, the voltage of the first torque signal Tmain increases linearly. When the steering force τ reaches 1.0, the voltage of the first torque signal Tmain reaches 5 V. Conversely, as the steering force τ decreases up to a relative value of - 1.0, the voltage of the first torque signal Tmain decreases linearly. When the steering force τ reaches - 1.0, the voltage reaches 0 V.

The output voltage of the second unit sensor 2B is the same as the voltage of the first torque signal Tmain. The output of the second sensor unit 2B is input to the output adjuster 2C that includes a differential amplifier. Applied to the positive input of the differential amplifier is DC voltage V1 which is supplied from a DC power supply. This voltage V1 is a voltage of 5V. The negative input of the differential amplifier receives the output of the second sensor unit 2B. Thus, the output of the output adjuster 2C is a signal the voltage of which is 5V minus the voltage of the first torque signal Tmain of FIG. 3; that is, the output adjuster 2C outputs the second torque signal Tsub the voltage of which is shown in FIG. 3. When the steering force τ (torque) exerted by the driver is zero, the output adjuster 2C outputs a voltage of 2.5 V. As the steering force τ increases up to a relative value of 1.0, the voltage of the second torque signal Tsub decreases linearly. When the steering force τ reaches 1.0, the voltage of the second torque signal Tsub reaches 0 V. Conversely, as the steering force τ decreases up to a relative value of - 1.0, the voltage of the second torque signal Tsub increases linearly. When the steering force τ reaches - 1.0, the voltage reaches 5 V.

As above, the torque sensor 2 of FIG. 2 is dually redundant, having two sensor units, 2A and 2B. Note that the sum of the first torque signal Tmain and the second torque signal Tsub always amounts to 5V if the two signals are normal.

Since the two torque signals Tmain and Tsub have opposite polarities, it is possible to detect typical failures of the torque sensor 2 attributable to its drawbacks.

Described next with reference to FIGS. 4 and 5 are other possible configurations of the torque sensor 2. FIGS. 4 and 5 are block diagrams illustrating alternative configurations of the torque sensor 2 used for the power steering system of the first example.

FIG. 4 illustrates a sensor that comprises a first torque sensor 2 and a second torque sensor 2'. The first torque sensor 2 includes the first sensor unit 2A whereas the second torque sensor 2' includes the second sensor unit 2B and the output adjuster 2C. The first sensor unit 2A outputs the first torque signal Tmain the voltage of which is shown in FIG. 3. The output voltage of the second unit sensor 2B is the same as the voltage of the first torque signal Tmain; thus, the output of the output adjuster 2C, or the output of the second torque sensor 2', is the second torque signal Tsub the voltage of which is shown in FIG. 3.

As above, the torque sensor of FIG. 4 is also dually redundant, having two sensors, 2 and 2'. The sum of the first torque signal Tmain and the second torque signal Tsub always amounts to 5V if the two signals are normal.

FIG. 5 illustrates a sensor that comprises the first sensor unit 2A and the output adjuster 2C. The first sensor unit 2A outputs the first torque signal Tmain the voltage of which is shown in FIG. 3. The output adjuster 2C outputs the second torque signal Tsub the voltage of which is shown in FIG. 3.

Despite the presence of the single sensor unit 2A, the sensor of FIG. 5 is also redundant in that the two output signals Tmain and Tsub are used. The sum of the first torque signal Tmain and the second torque signal Tsub always amounts to 5V if the two signals are normal.

Referring again to FIG. 1, the external device 1-2 comprises an excessive torque detector 102, an anomalous torque-current correlation detector 104, and an anomalous current detector 105. The external device 1-2 is designed to detect abnormalities of the main microcomputer 1-1 or the like. When either of the detectors 102, 104 and 105 detects an abnormality, the motor 6 is caused to stop. The excessive torque detector 102 receives both of the first torque signal Tmain and the second torque signal Tsub. The anomalous torque-current correlation detector 104 and the anomalous current detector 105 receive not only the first torque signal Tmain and the second torque signal Tsub but also the total current detected by a current sensor SA. All the outputs of the detectors 102, 104, and 105 are extracted via a NOR circuit NR1.

The external device 1-2 can be implemented by a sub-microcomputer or a power integrated circuit (IC). Unlike the main microcomputer 1-1, the external device 1-2 does not include the controller 100 used to control the motor 6. Thus, the external device 1-2 can be implemented by a sub-microcomputer or a power IC, both of which operate at a lower speed and are less expensive than the main microcomputer 1-1.

The main microcomputer 1-1 and the external device 1-2 constitute the electric power steering controller of the first example. The electric power steering system of the first example is constituted by the following components: the main microcomputer 1-1; the external device 1-2; the three-phase inverter 5 (drive circuit); and the motor 6.

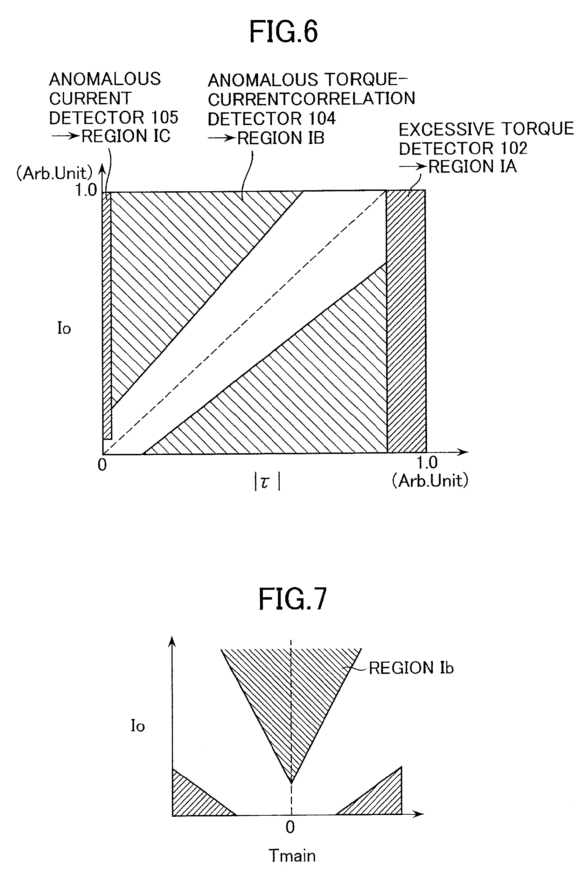

Described next with reference to FIGS. 6 through 9 is the detection performed by each component of the external device 1-2.

FIG. 6 is a graph showing an abnormal region(s) detected by each of the excessive torque detector 102, the anomalous torque-current correlation detector 104, and the anomalous current detector 105, where the vertical axis represents the absolute value of motor drive current Io and the horizontal axis represents the absolute value of the steering force τ (torque) applied to the steering wheel 7. In the figure, each abnormal region is hatched. The motor drive current Io is detected by the current sensor SA, which is attached to the wiring used to supply voltage VB from a battery or the like to the three-phase inverter 5 (see FIG. 1).

The excessive torque detector 102 detects an abnormality of electric power steering control, that is, determines that the main microcomputer 1-1 is in an abnormal state, when the steering force τ (torque) applied to the steering wheel 7 exceeds a given threshold value. The excessive torque detector 102 does so, irrespective of the motor drive current Io. The abnormal region detected by the excessive torque detector 102 is the region Ia of FIG. 6.

FIG. 7 shows the abnormal regions detected by the anomalous torque-current correlation detector 104. In the figure, the horizontal axis represents the first torque signal Tmain, and the vertical axis represents the motor drive current Io.

The anomalous torque-current correlation detector 104 monitors the correlation between the steering force τ (torque) applied to the steering wheel 7 and the motor drive current Io used to drive the motor 6, thereby detecting any disruption of the correlation. Upon finding a disruption of the correlation, the anomalous torque-current correlation detector 104 detects an abnormality of electric power steering control, that is, determines that the main microcomputer 1-1 is in an abnormal state. The anomalous torque-current correlation detector 104 sets upper and lower limits of the motor drive current Io based on the first torque signal Tmain and judges the main microcomputer 1-1 to be normal when there is a correlation between the steering force τ (torque) and the motor drive current Io. The anomalous torque-current correlation detector 104 judges the microcomputer 1-1 to be abnormal when the steering force τ and the motor drive current Io deviate from a given correlation region, that is, enter the hatched abnormal regions Ib of FIG. 7.

The hatched regions Ib of FIG. 7 are also shown in FIG. 6 where the horizontal axis represents not the first torque signal Tmain but the absolute value of the steering force τ (torque) applied to the steering wheel 7.

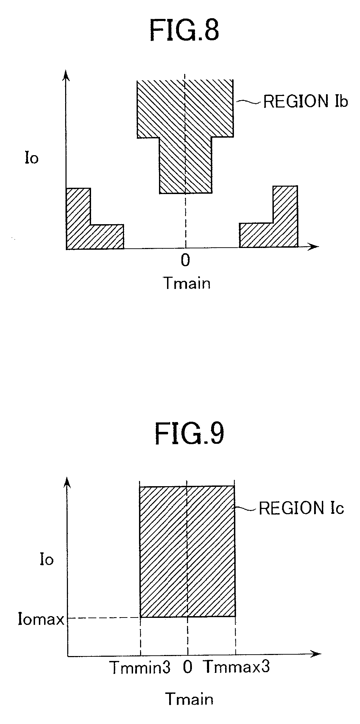

Note that, as illustrated in FIG. 8, the abnormal regions Ib can instead be defined by stepped lines.

FIG. 9 shows the abnormal region detected by the anomalous current detector 105. In the figure, the horizontal axis represents the first torque signal Tmain, and the vertical axis represents the motor drive current Io.

The anomalous current detector 105 detects an abnormality of electric power steering control, that is, determines that the main microcomputer 1-1 is in an abnormal state, when the motor drive current Io exceeds a given value with no or almost zero steering force (torque) applied to the steering wheel 7. Specifically, the anomalous current detector 105 detects an abnormality when the first torque signal Tmain is within the range of Tmmin3 and Tmmax3 with almost zero torque applied and when the motor drive current Io is equal to or greater than Iomax. The abnormal region detected by the anomalous current detector 105 is shown by the hatched region Ic of FIG. 9.

The hatched region Ic of FIG. 9 is also shown in FIG. 6 where the horizontal axis represents not the first torque signal Tmain but the absolute value of the steering force τ (torque) applied to the steering wheel 7.

The anomalous current detector 105 could be regarded as a special form of the anomalous torque-current correlation detector 104, but the former judges even smaller motor drive current Io to be abnormal than the latter does, as illustrated in FIG. 6. This is because the correlation between the steering force τ (torque) and the motor drive current Io varies depending on vehicle speed and other factors and also because the anomalous torque-current correlation detector 104 has to take this change into account to judge a wider range normal.

In light of the above, the excessive torque detector 102 and the anomalous current detector 105 could be said to have higher abnormality detection capabilities than the anomalous torque-current correlation detector 104 does.

Note that the anomalous current detector 105 detects an abnormality (the region Ic) when the drive current Io exceeds a given value with no or almost zero steering force (torque) applied to the steering wheel 7, provided that the operation of the torque sensor 2 is normal. This prevents an abnormality of the torque sensor 2 from stopping the operation of the motor 6. The conditions with which to determine the operation of the torque sensor 2 is normal will later be discussed with reference to FIG. 10.

When an abnormality is detected by either of the excessive torque detector 102, the anomalous torque-current correlation detector 104, and the anomalous current detector 105, the operation of the motor 6 is stopped. Methods for stopping the motor 6 include 1) masking the motor drive signals 3 with the use of AND gates 11, 2) disconnecting a main relay 12 to stop power supply to the three-phase inverter 5, and 3) disconnecting phase output relays 13 to stop current supply to the motor 6. While the power steering system of FIG. 1 includes the AND gates 11, the main relay 12, and the phase output relays 13, only one component of the three may be used to stop current supply to the motor 6. In that case, the power steering system includes the main relay 12 or the phase output relays 13. Alternatively, current supply to the motor 6 may be stopped by using two components of the three; in that case, the power steering system includes the main relay 12 and the phase output relays 13.

Described next with reference to FIGS. 10 and 11 is the detection performed by the torque sensor abnormality detector 101 of the power steering system of the first example. FIG. 10 is a flowchart of the detection performed by the torque sensor abnormality detector 101. FIG. 11 is a graph illustrating the abnormal regions detected by the torque sensor abnormality detector 101 in which the abnormal regions detected by the detectors 102, 104, and 105 of the external device 1-2 are also shown. In FIG. 11, the horizontal axis represents the first torque signal Tmain while the vertical axis represents the second torque signal Tsub.

The torque sensor abnormality detector 101 inside the main microcomputer 1-1 receives the first torque signal Tmain and the second torque signal Tsub. The torque sensor abnormality detector 101 judges the signals Tmain and Tsub normal if the signals are each within an acceptable voltage range; if not, the detector 101 judges them abnormal.

The use of the torque sensor abnormality detector 101 allows detection of abnormalities attributable to short-circuiting of the wires for the first and second torque signals Tmain and Tsub to the ground or power supply. Also, when either one of the first torque signal Tmain and the second torque signal Tsub is out of its acceptable voltage range, the torque sensor abnormality detector 101 judges that signal to be abnormal and continues control using the other normal signal.

Even when the first torque signal Tmain and the second torque signal Tsub are within the acceptable voltage ranges (the range of Tmmax2 to Tmmin2 and the range of Tsmax2 to Tsmin2, respectively), the torque sensor abnormality detector 101 detects an abnormality of the torque sensor 2 if the following condition is met.

As already stated, when the torque sensor 2 is normal, the first torque signal Tmain and the second torque signal Tsub have the correlation of FIG. 3; that is, Tmain + Tsub = 5.0 V.

Thus, in Step S11 of FIG. 10, the torque sensor abnormality detector 101 judges the torque sensor 2 to be normal when the difference between (Tmain + Tsub) and 5.0 V is lower than an error ε (that is, |Tmain + Tsub - 5.0| < ε). When the difference is equal to or greater than the error ε, the torque sensor abnormality detector 101 detects an abnormality of the torque sensor 2 (as illustrated by the regions II of FIG. 11).

When an abnormality is detected with the use of the regions II (that is, when the operation of the torque sensor 2 is abnormal), the main microcomputer 1-1 gradually reduces the output torque of the motor 6 or continues control with the use of the other torque sensor unit which has been judged not abnormal.

Further, in Step S12 of FIG. 10, the torque sensor abnormality detector 101 detects an abnormality (the regions IIm of FIG. 11) when the first torque signal Tmain deviates from the range between two threshold values: Tmmax2 and Tmmin2. In Step S13, the torque sensor abnormality detector 101 also detects an abnormality (the regions IIs of FIG. 11) when the second torque signal Tsub is out of the range of Tsmax2 to Tsmin2.

When an abnormality of the second torque signal Tsub is detected with the use of the regions IIs, control continuation is possible using the first torque signal Tmain. In contrast, when an abnormality of the first torque signal Tmain is detected with the use of the regions IIm, control continuation is possible using the second torque signal Tsub.

The threshold values Tmmax2 and Tsmax2 used to detect excessive torque can be determined based on steering forces at the time of normal operation and on the steering force required to generate the largest rack propulsion. Suppose that the largest rack propulsion is 10,000 N and the pinion gear used to move the rack has a pitch-circle diameter of 5 cm (a pitch-circle radius of 2.5 cm). In that case, the torque at the time of the largest rack propulsion is 250 Nm, and the steering force (torque) applied to the steering wheel 7 is 25 Nm, provided that the motor 6 increases the steering force (torque) applied to the steering wheel 7 tenfold. Therefore, when the steering force (torque) applied to the steering wheel 7 exceeds 25 Nm, it can be determined that something abnormal has happened.

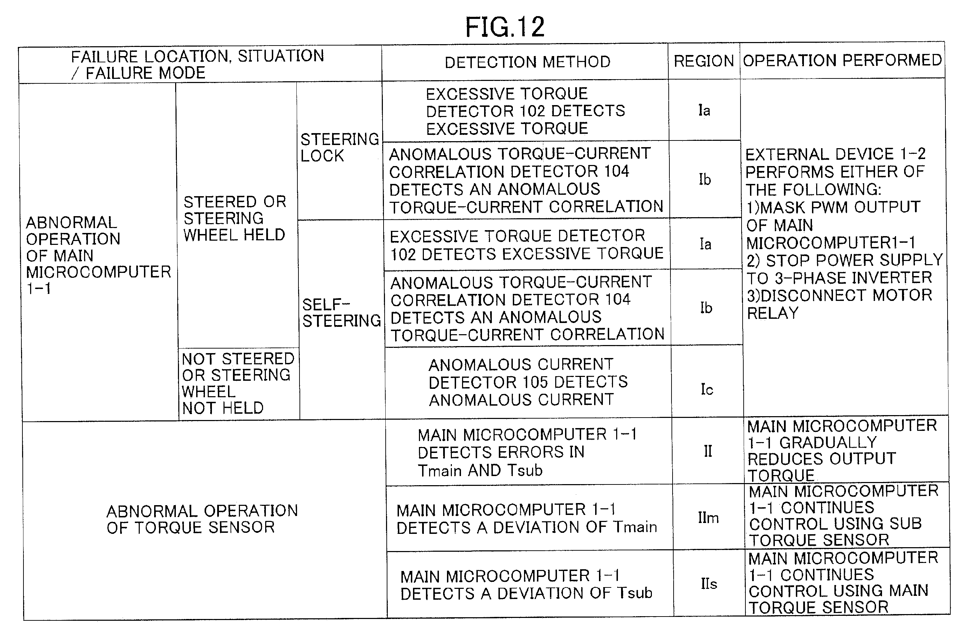

Described next with reference to FIG. 12 are the detections performed by the torque sensor abnormality detector 101 and by the external device 1-2. FIG. 12 lists the detections performed by the torque sensor abnormality detector 101 and by the components of the external device 1-2 of the electric power steering controller of the first example.

FIG. 12 summarizes which abnormality detector detects which abnormality (an abnormality of the main microcomputer 1-1 or of the torque sensor 2).

Described first is a case where the driver is controlling or holding the steering wheel 7 when the operation of the main microcomputer 1-1 has become abnormal. If the abnormality of the main microcomputer 1-1 is accompanied by steering lock, the driver would apply a large steering force to the steering wheel 7 so as to control the vehicle. As a result, the excessive torque detector 102 will detect the abnormality (the region Ia of FIG. 6). The anomalous torque-current detector 104 also detects the abnormality (the regions Ib of FIG. 6) because drive current is applied to the motor 6, irrespective of the steering force.

Similarly, when the abnormality of the main microcomputer 1-1 is instead followed by self-steering, the driver would also apply a large steering force to the steering wheel 7 so as to control the vehicle. As a result, the excessive torque detector 102 will detect the abnormality (the region Ia of FIG. 6). Self-steering refers to steering movements unintended by the driver; it happens regardless of whether the driver is holding the steering wheel 7 or not. The anomalous torque-current detector 104 also detects the abnormality (the regions Ib of FIG. 6) because drive current is applied to the motor 6, irrespective of the steering force.

Described next is a case where the driver is not controlling or holding the steering wheel 7 when the operation of the main microcomputer 1-1 has become abnormal. The failure mode that will take effect in this case is self-steering resulting from the abnormality of the main microcomputer 1-1. Because, in this case, drive current is applied to the motor 6 despite application of no steering force, the anomalous current detector 105 detects the abnormality (the region Ic of FIG. 6).

When an abnormality of the main microcomputer 1-1 has been detected by either of the detectors 102, 104 and 105 as above, the external device 1-2 outputs a signal to stop the operation of the motor 6.

In the event of an abnormality of the torque sensor 2, the torque sensor abnormality detector 101 inside the main microcomputer 1-1 detects the abnormality. This is followed by gradual reduction of the output torque by the main microcomputer 1-1 or control continuation with the use of the other torque sensor unit which has been judged not abnormal.

As above, when an abnormality is detected by either of the excessive torque detector 102, the anomalous torque-current correlation detector 104, and the anomalous current detector 105, the operation of the motor 6 is stopped. In contrast, when the torque sensor abnormality detector 101 detects an abnormality of the torque sensor 2, it may be possible to continue the operation of the motor 6 with the use of the other torque sensor unit which has been judged not abnormal. For this reason, when the torque sensor abnormality detector 101 detects an abnormality of the torque sensor 2, the external device 1-2 stops the operation of the excessive torque detector 102, the anomalous torque-current correlation detector 104, and the anomalous current detector 105 using an abnormality signal transmitted from the torque sensor abnormality detector 101. In other words, the abnormality detection by the torque sensor abnormality detector 101 is prioritized over the abnormality detections by the excessive torque detector 102, the anomalous torque-current correlation detector 104, and the anomalous current detector 105.

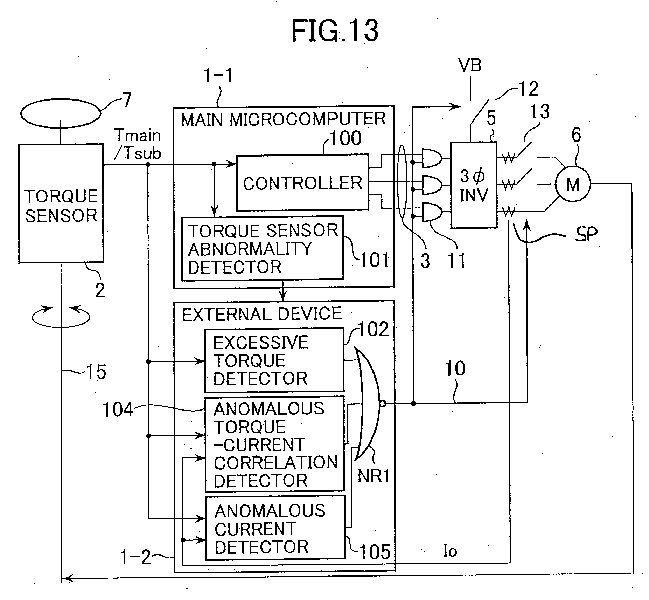

Described with reference now to FIG. 13 is an alternative configuration of the electric power steering system of FIG. 1 with the electric power steering controller of the first example. FIG. 13 is a block diagram illustrating that system. In FIG. 13, the same reference numerals as those used in FIG. 1 denote identical components.

In the configuration of FIG. 1, the motor drive current Io is detected by the current sensor SA, which is attached to the wiring used to supply the voltage VB from a battery or the like to the three-phase inverter 5.

In FIG. 13, by contrast, current sensors SP are attached to the power supply wires of the three-phase inverter 5 which are connected to the phase wires of the motor 6. The current sensors SP are designed to detect phase currents.

The anomalous torque-current correlation detector 104 and the anomalous current detector 105 each calculate the total current using the phase currents detected by the current sensors SP and the magnetic pole position of the motor 6. Thereafter, the detectors 104 and 105 perform abnormality detection based on the total current and on the first and second torque signals Tman and Tsub.

Thus, the system operation of this alternative example is more complex than in FIG. 1.

Conventionally, an electric power steering system is designed to detect an abnormality of its main microcomputer and unable to detect an abnormality of its torque sensor. As a result, such a system may misjudge an abnormality of the torque sensor as an abnormality of the main microcomputer. Because a power steering system requires different operations for torque-sensor abnormalities and main-microcomputer abnormalities, it has to distinguish between them.

The first example is thus designed such that the torque sensor abnormality detector 101 of the main microcomputer 1-1 detects an abnormality of the redundant torque sensor 2 based on the output of the torque sensor 2. When the torque sensor 2 is abnormal, the main microcomputer 1-1 performs gradual torque reduction. Further, the abnormality detection by the torque sensor 2 is prioritized over the abnormality detection by the external device 1-2. Thus, the external device 1-2 does not regard an abnormality of the torque sensor 2 as an excessive steering force. Accordingly, the main microcomputer 1-1 can perform gradual torque reduction without stopping the operation of the motor 6.

On the other hand, the external device 1-2 detects abnormalities of the main microcomputer 1-1. When the steering force detected by the torque sensor 2 is greater than a predetermined threshold value, the excessive torque detector 102 regards this as an abnormality of electric power steering control, that is, an abnormality of the main microcomputer 1-1 that exercises the control. When the operation of the main microcomputer 1-1 is abnormal, the motor 6 is caused to stop. It is therefore possible to detect abnormalities of the torque sensor 2 and abnormalities of the main microcomputer 1-1 in a distinguishable manner, thereby achieving abnormality-based system control.

Because a conventional power steering system is based on the assumption that the driver is always controlling or holding the steering wheel, mere monitoring of excessive torque by the system does not make it possible to detect self-steering when the driver is not holding the steering wheel or when the driver releases his hands from the steering wheel.

In contrast, the first example is also designed such that the anomalous current detector 105 monitors the steering force and the current that flows through the motor 6. When current flows through the motor 6 with no steering force applied to the steering wheel 7, the anomalous current detector 105 regards this as abnormality of electric power steering control, that is, an abnormality of the main microcomputer 1-1 that exercises the control, thereby stopping the operation of the motor 6. This allows detection of self-steering even when the driver is not controlling or holding the steering wheel 7.

The anomalous torque-current correlation detector 104 monitors the correlation between the steering force and the current that flows through the motor 6. When the correlation is disrupted with the steering wheel 7 not being controlled or held by the driver, the anomalous torque-current correlation detector 104 can detect steering lock or self-steering and regards this as an abnormality of electric power steering control, that is, an abnormality of the main microcomputer 1-1 that exercises the control, thereby stopping the operation of the motor 6.

As above, the first example allows appropriate system control even when the operation of the torque sensor 2 is abnormal.

The first example further allows detection of self-steering when the driver is not holding the steering wheel 7 or when the driver releases his hands from the steering wheel 7.

Furthermore, the first example allows detection of steering lock or self-steering when the driver is controlling or holding the steering wheel 7.

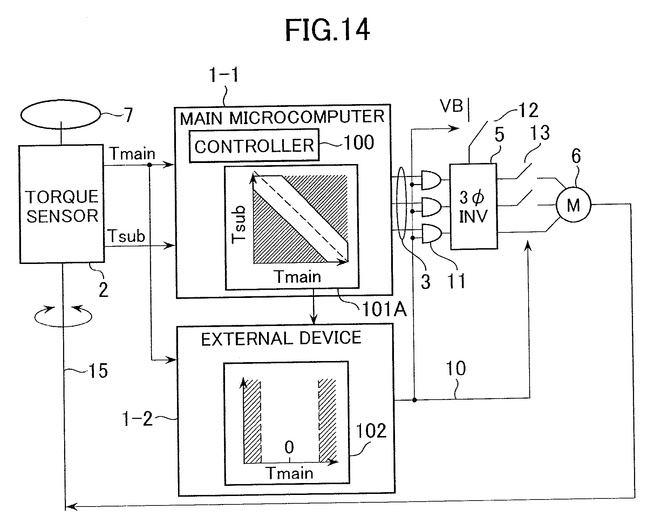

Described next with reference to FIGS. 14 through 17 are the configuration and operation of an electric power steering controller according to a second example which is useful for understanding the invention.

First described with reference to FIG. 14 is the configuration of an electric power steering system with the power steering controller of the second example. FIG. 14 is a block diagram illustrating that system. In FIG. 14, the same reference numerals as those used in FIG. 1 denote identical components.

The first and second torque signals Tmain and Tsub are input to the main microcomputer 1-1. The external device 1-2 receives only the first torque signal Tmain.

The main microcomputer 1-1 includes the controller 100 and a torque sensor abnormality detector 101A. The controller 100 outputs motor drive signals 3 to the three-phase inverter 5 based on the first torque signal Tmain or the second torque signal Tsub and on a magnetic pole signal detected by a magnetic pole sensor installed in the motor 6.

The torque sensor abnormality detector 101A obtains the difference between the first and second torque signals Tmain and Tsub, thereby detecting an abnormality of the torque sensor 2. The torque sensor abnormality detector 101A judges the torque sensor 2 normal if the two signals Tmain and Tsub have a given correlation (i.e., the sum of the two = 5.0 V); if not, the detector 101A judges the torque sensor 2 abnormal.

The external device 1-2 includes only the excessive torque detector 102. The excessive torque detector 102 receives the first torque signal Tmain. When the first torque signal Tmain is lower than a given threshold value (i.e., negatively excessive steering force or torque) or greater than a given threshold value (i.e., positively excessive steering force or torque), the excessive torque detector 102 detects an abnormality of electric power steering control, that is, an abnormality of the main microcomputer 1-1, thereby stopping the operation of the motor 6.

Although FIG. 14 illustrates the use of the first torque signal Tmain for the detection of positively or negatively excessive torque, the excessive torque detector 102 may instead use the second torque signal Tsub. In that case, when the second torque signal Tsub is lower than a given threshold value (i.e., negatively excessive steering force or torque) or greater than a given threshold value (i.e., positively excessive steering force or torque), the excessive torque detector 102 detects an abnormality of electric power steering control, that is, an abnormality of the main microcomputer 1-1, thereby stopping the operation of the motor 6.

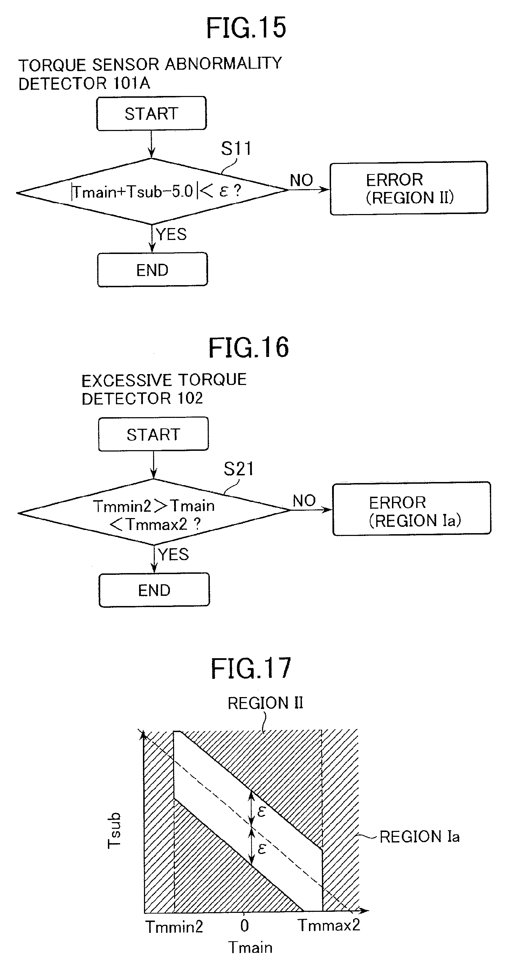

Referring now to FIG. 15, the operation of the torque sensor abnormality detector 101A will be described. FIG. 15 is a flowchart illustrating the operation of the torque sensor abnormality detector 101A of the second example.

When the torque sensor 2 is normal, the first torque signal Tmain and the second torque signal Tsub have the correlation of FIG. 3; that is, Tmain + Tsub = 5.0 V.

Thus, in Step S11 of FIG. 15, the torque sensor abnormality detector 101A judges the torque sensor 2 to be normal when the difference between (Tmain + Tsub) and 5.0 V is lower than an error ε (that is, |Tmain + Tsub - 5.0|< ε). When the difference is equal to or greater than the error ε, the torque sensor abnormality detector 101A detects an abnormality of the torque sensor 2 (as illustrated by the regions II of FIG. 17).

Described next with reference to FIG. 16 is the operation of the excessive torque detector 102 of the second example. FIG. 16 is a flowchart illustrating the operation of the excessive torque detector 102 of the second example.

In Step S21, the excessive torque detector 102 judges the main microcomputer 1-1 to be normal if the first torque signal Tmain is within the range of Tmmax2 to Tmmin2 (i.e., Tmmin2 < Tmain < Tmmax2); if not, the detector 102 judges the main microcomputer 1-1 to be abnormal (the regions Ia of FIG. 17).

The threshold values used to detect excessive torque can be determined based on steering forces at the time of normal operation and on the steering force required to generate the largest rack propulsion. Suppose that the largest rack propulsion is 10,000 N and the pinion gear used to move the rack has a pitch-circle diameter of 5 cm (a pitch-circle radius of 2.5 cm). In that case, the torque at the time of the largest rack propulsion is 250 Nm, and the steering force (torque) applied to the steering wheel 7 is 25 Nm, provided that the motor 6 increases the steering force (torque) applied to the steering wheel 7 tenfold. Therefore, when the steering force (torque) applied to the steering wheel exceeds 25 Nm, it can be determined that something abnormal has happened.

Discussed next with reference to FIG. 17 is the abnormal regions detected by the electric power steering controller of the second example. FIG. 17 is a graph illustrating the abnormal regions.

In the figure, the horizontal axis represents the first torque signal Tmain while the vertical axis represents the second torque signal Tsub. An abnormality is detected (the regions Ia) when the first torque signal Tmain is out of the range of Tmmax2 to Tmmin2.

Further, an abnormality is detected (the regions II) when the difference between (Tmain + Tsub) and 5.0 V is equal to or greater than the error ε.

As above, the second example allows detection of abnormalities of the torque sensor 2 and abnormalities of the main microcomputer 1-1 in a distinguishable manner; thus, appropriate system control is possible even when the operation of the torque sensor 2 is abnormal.

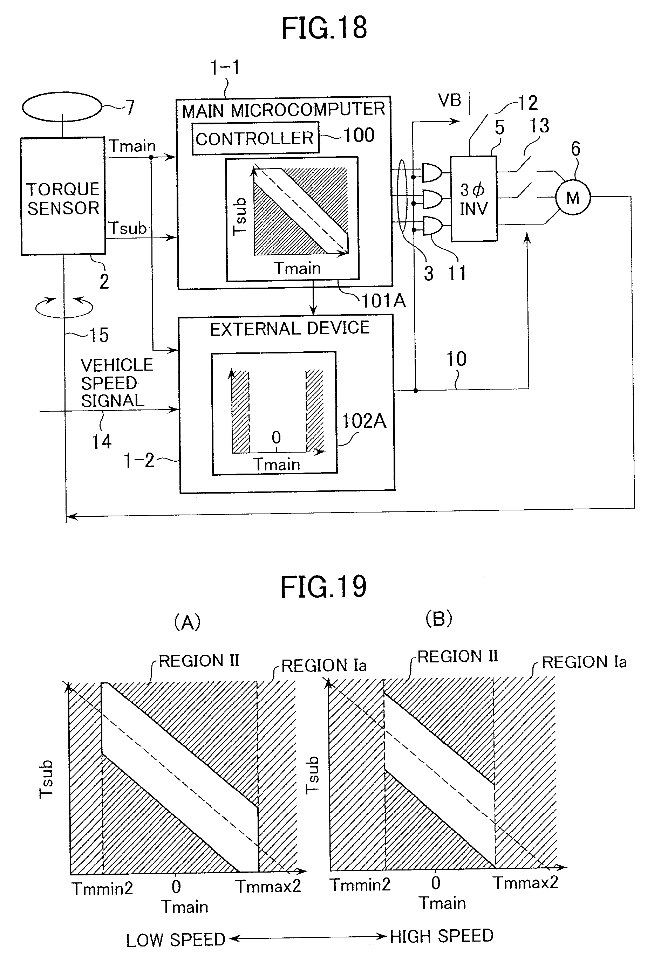

Described now with reference to FIGS. 18 and 19 are the configuration and operation of an electric power steering controller according to a third example which is useful for understanding the invention. FIG. 18 is a block diagram illustrating the configuration of an electric power steering system with the steering controller of the third example. In FIG. 18, the same reference numerals as those used in FIG. 14 denote identical components. FIG. 19 is a graph illustrating the abnormal regions detected by the power steering controller of the third example.

The first and second torque signals Tmain and Tsub are input to the main microcomputer 1-1. The external device 1-2 receives only the first torque signal Tmain.

The main microcomputer 1-1 includes the controller 100 and the torque sensor abnormality detector 101A. The controller 100 outputs motor drive signals 3 to the three-phase inverter 5 based on the first torque signal Tmain or the second torque signal Tsub and on a magnetic pole signal detected by a magnetic pole sensor installed in the motor 6.

The torque sensor abnormality detector 101A is the same as that illustrated in FIG. 14; it obtains the difference between the first and second torque signals Tmain and Tsub, thereby detecting an abnormality of the torque sensor 2. The torque sensor abnormality detector 101A judges the torque sensor 2 normal if the two signals Tmain and Tsub have a given correlation (i.e., the sum of the two = 5.0 V); if not, the detector 101A judges the torque sensor 2 abnormal.

The external device 1-2 includes only an excessive torque detector 102A. The excessive torque detector 102A receives the first torque signal Tmain and a vehicle speed signal 14. When the first torque signal Tmain is lower than a given threshold value (i.e., negatively excessive steering force or torque) or greater than a given threshold value (i.e., positively excessive steering force or torque), the excessive torque detector 102A detects an abnormality of electric power steering control, that is, an abnormality of the main microcomputer 1-1, thereby stopping the operation of the motor 6.

The excessive torque detector 102A can vary the threshold values Tmmax2 and Tmmin2 based on the vehicle speed signal 14. As illustrated in FIG. 19(A), the range of Tmmax2 to Tmmin2 is widened when the vehicle speed is low, so that a larger steering force can be judged normal. Conversely, when the vehicle speed is high, the range of Tmmax2 to Tmmin2 is narrowed as illustrated in FIG. 19(B), so that a smaller steering force can be judged abnormal.

As above, the third example allows detection of abnormalities of the torque sensor 2 and abnormalities of the main microcomputer 1-1 in a distinguishable manner; thus, appropriate system control is possible even when the operation of the torque sensor 2 is abnormal.

Moreover, the range with which to detect excessive torque can be varied based on the vehicle speed. At low speed when a large steering force is required, the driver is allowed to apply a large steering force. At high speed when a large steering force is not necessary, abnormalities can be detected more reliably.

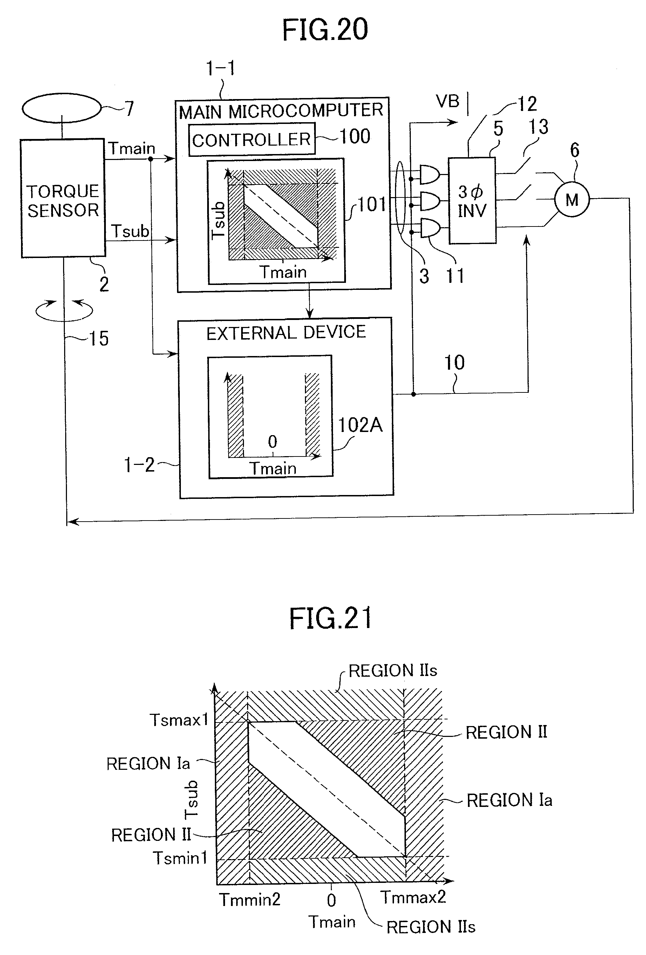

Described next with reference to FIGS. 20 and 21 are the configuration and operation of an electric power steering controller according to a fourth example which is useful for understanding the invention. FIG. 20 is a block diagram illustrating the configuration of an electric power steering system with the steering controller of the fourth example. In FIG. 20, the same reference numerals as those used in FIG. 1 denote identical components. FIG. 21 is a graph illustrating the abnormal regions detected by the power steering controller of the fourth example.

The first and second torque signals Tmain and Tsub are input to the main microcomputer 1-1. The external device 1-2 receives only the first torque signal Tmain.

The main microcomputer 1-1 includes the controller 100 and the torque sensor abnormality detector 101. The controller 100 outputs motor drive signals 3 to the three-phase inverter 5 based on the first torque signal Tmain or the second torque signal Tsub and on a magnetic pole signal detected by a magnetic pole sensor installed in the motor 6.

The torque sensor abnormality detector 101 obtains the difference between the first and second torque signals Tmain and Tsub, thereby detecting an abnormality of the torque sensor 2. As in FIG. 10, the torque sensor abnormality detector 101 detects an abnormality when the first and second torque signals Tmain and Tsub are in any of the abnormal regions II, IIm, and IIs of FIG. 21. This allows detection of abnormalities attributable to short-circuiting of the wires for the first and second torque signals Tmain and Tsub to the ground or power supply. Also, when either of the torque signals Tmain and Tsub is out of a given voltage range, the torque sensor abnormality detector 101 judges that signal to be abnormal, thus allowing control continuation with the use of the other torque signal.

The external device 1-2 includes only the excessive torque detector 102. The excessive torque detector 102 receives only the first torque signal Tmain. When the first torque signal Tmain is lower than a given threshold value (i.e., negatively excessive steering force or torque) or greater than a given threshold value (i.e., positively excessive steering force or torque), the excessive torque detector 102 detects an abnormality of electric power steering control, that is, an abnormality of the main microcomputer 1-1, thereby stopping the operation of the motor 6.

As stated above, the external device 1-2 receives only the first torque signal Tmain. Thus, when a first torque signal Tmain equivalent to a large steering force is input to the external device 1-2, no judgment can be made as to whether that is due to an abnormality of the torque sensor 2 or to the driver's steering. Accordingly, when the first torque signal Tmain is out of a given voltage range, the excessive torque detector 102 of the external device 1-2 regards this as the occurrence of an excessive steering force, and control continuation with the use of the second torque signal Tsub becomes impossible.

Although FIG. 20 illustrates the use of the first torque signal Tmain for the detection of positively or negatively excessive torque, the excessive torque detector 102 may instead use the second torque signal Tsub. In that case, when the second torque signal Tsub is lower than a given threshold value (i.e., negatively excessive steering force or torque) or greater than a given threshold value (i.e., positively excessive steering force or torque), the excessive torque detector 102 detects an abnormality of electric power steering control, that is, an abnormality of the main microcomputer 1-1, thereby stopping the operation of the motor 6.

In FIG. 21, the horizontal axis represents the first torque signal Tmain while the vertical axis represents the second torque signal Tsub. The excessive torque detector 102 detects an abnormality (the regions Ia) when the first torque signal Tmain is out of the range of Tmmax2 to Tmmin2.

Further, the torque sensor abnormality detector 101 detects an abnormality (the regions II) when the difference between (Tmain + Tsub) and 5.0 V is equal to or greater than the error ε. The torque sensor abnormality detector 101 also detects an abnormality (the regions IIm) when the first torque signal Tmain is out of the voltage range of Tmmax2 to Tmmin2. Moreover, as in Step S13, the torque sensor abnormality detector 101 detects an abnormality (the regions IIs) when the second torque signal Tsub is out of the range of Tsmax2 to Tsmin2.

As above, the fourth example allows detection of abnormalities of the torque sensor 2 and abnormalities of the main microcomputer 1-1 in a distinguishable manner; thus, appropriate system control is possible even when the operation of the torque sensor 2 is abnormal.

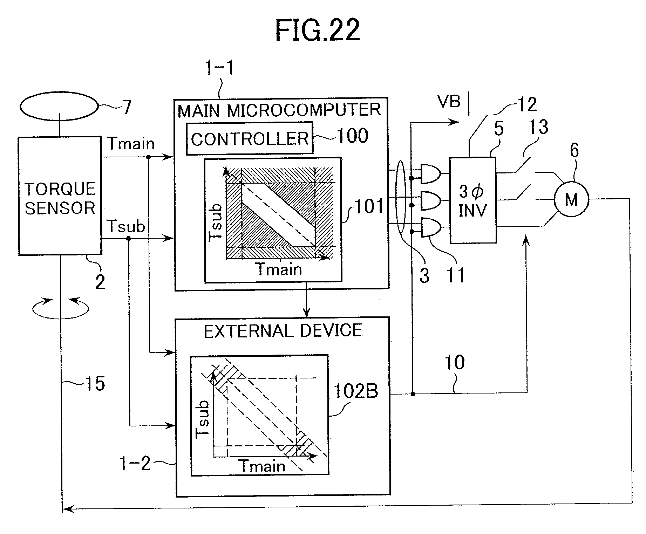

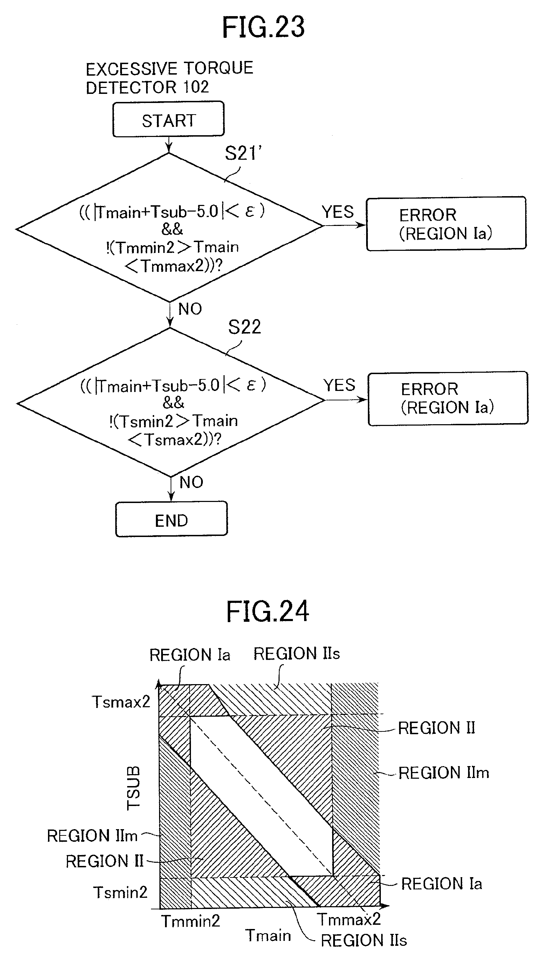

Described next with reference to FIGS. 22 through 24 are the configuration and operation of an electric power steering controller according to a fifth example which is useful for understanding the invention. FIG. 22 is a block diagram illustrating the configuration of an electric power steering system with the steering controller of the fifth example. In FIG. 22, the same reference numerals as those used in FIG. 1 denote identical components. FIG. 23 is a flowchart illustrating the operation of an excessive torque detector 102B used for the power steering controller of the fifth example. FIG. 24 is a graph illustrating the abnormal regions detected by the power steering controller of the fifth example.

The first and second torque signals Tmain and Tsub are input to the main microcomputer 1-1 and also to the external device 1-2.

The main microcomputer 1-1 includes the controller 100 and the torque sensor abnormality detector 101. The controller 100 outputs motor drive signals 3 to the three-phase inverter 5 based on the first torque signal Tmain or the second torque signal Tsub and on a magnetic pole signal detected by a magnetic pole sensor installed in the motor 6.

The torque sensor abnormality detector 101 obtains the difference between the first and second torque signals Tmain and Tsub, thereby detecting an abnormality of the torque sensor 2. As in FIG. 10, the torque sensor abnormality detector 101 detects an abnormality when the first and second torque signals Tmain and Tsub are in any of the abnormal regions II, IIm, and IIs of FIG. 24. This allows detection of abnormalities attributable to short-circuiting of the wires for the first and second torque signals Tmain and Tsub to the ground or power supply. Also, when either of the torque signals Tmain and Tsub is out of a given voltage range, the torque sensor abnormality detector 101 judges that signal to be abnormal, thus allowing control continuation with the use of the other torque signal.

The external device 1-2 includes only the excessive torque detector 102B. The excessive torque detector 102B receives both of the first and second torque signals Tmain and Tsub for abnormality detection. The excessive torque detector 102B detects an abnormality of the main microcomputer 1-1 only when an excessive steering force (torque) is applied with the operation of the torque sensor 2 being normal; the abnormality detection causes the motor 6 to stop.

In the fifth example, when the operation of the torque sensor 2 is abnormal, the excessive torque detector 102B makes no judgment whether to stop the motor 6 or not; thus, the main microcomputer 1-1 can continue the operation of the motor 6. Further, when either of the torque signals Tmain and Tsub is out of a given voltage range, the main microcomputer 1-1 judges that signal to be abnormal, thus allowing control continuation with the use of the other torque signal.

In the event of an abnormality of the torque sensor 2, it is also possible that the excessive torque detector 102B makes no judgment whether to stop the operation of the motor 6 or not, provided that the main microcomputer 1-1 has already started any of the operations of FIG. 12 for the abnormality of the torque sensor 2 within a given period of time.

The fifth example makes it possible to detect abnormalities of the main microcomputer 1-1 even when the operation of the torque sensor 2 is abnormal and subsequently stop the operation of the motor 6.

Referring to FIG. 23, the excessive torque detector 102B detects an abnormality (the regions Ia) in Step S21' if the equation |Tmain + Tsub - 5.0|< ε is true and if the first torque signal Tmain is out of the range of Tmmin2 to Tmmax2.

In Step S23, the excessive torque detector 102B detects an abnormality (the regions Ia) if the equation |Tmain + Tsub - 5.0|< ε is true and if the second torque signal Tsub is out of the range of Tsmin2 to Tsmax2.

In FIG. 24, the horizontal axis represents the first torque signal Tmain while the vertical axis represents the second torque signal Tsub. The excessive torque detector 102B detects an abnormality (the regions Ia) when the first torque signal Tmain is out of the range of Tmmax2 to Tmmin2.

Further, the torque sensor abnormality detector 101 detects an abnormality (the regions II) when the difference between (Tmain + Tsub) and 5.0 V is equal to or greater than the error ε. The torque sensor abnormality detector 101 also detects an abnormality (the regions IIm) when the first torque signal Tmain is out of the voltage range of Tmmax2 to Tmmin2. Moreover, as in Step S13, the torque sensor abnormality detector 101 detects an abnormality (the regions IIs) when the second torque signal Tsub is out of the range of Tsmax2 to Tsmin2.

When an abnormality of the second torque signal Tsub is detected with the use of the regions IIs, control continuation is possible using the first torque signal Tmain. In contrast, when an abnormality of the first torque signal Tmain is detected with the use of the regions IIm, control continuation is possible using the second torque signal Tsub.

As above, the fifth example allows detection of abnormalities of the torque sensor 2 and abnormalities of the main microcomputer 1-1 in a distinguishable manner; thus, appropriate system control is possible even when the operation of the torque sensor 2 is abnormal.

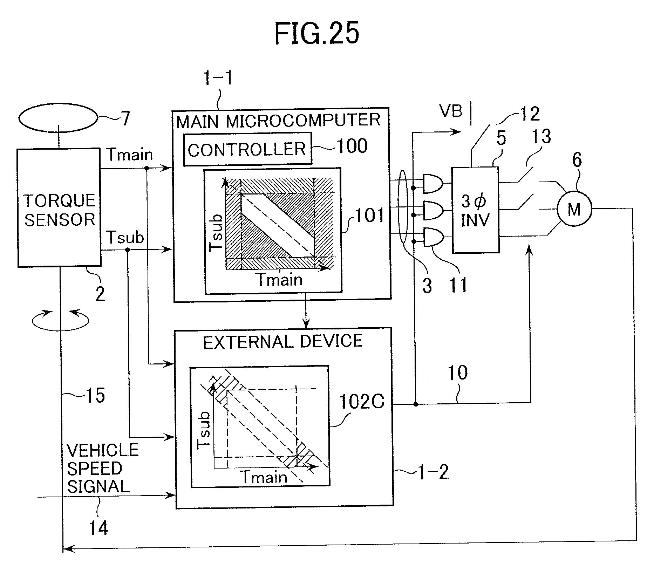

Described next with reference to FIG. 25 are the configuration and operation of an electric power steering controller according to a sixth example which is useful for understanding the invention. FIG. 25 is a block diagram illustrating the configuration of an electric power steering system with the steering controller of the sixth example. In FIG. 25, the same reference numerals as those used in FIG. 18 denote identical components.

The first and second torque signals Tmain and Tsub are input to the main microcomputer 1-1 and also to the external device 1-2.

The main microcomputer 1-1 includes the controller 100 and the torque sensor abnormality detector 101. The controller 100 outputs motor drive signals 3 to the three-phase inverter 5 based on the first torque signal Tmain or the second torque signal Tsub and on a magnetic pole signal detected by a magnetic pole sensor installed in the motor 6.

The torque sensor abnormality detector 101 obtains the difference between the first and second torque signals Tmain and Tsub, thereby detecting an abnormality of the torque sensor 2. As in FIG. 10, the torque sensor abnormality detector 101 detects an abnormality when the first and second torque signals Tmain and Tsub are in any of the abnormal regions II, IIm, and IIs of FIG. 24. This allows detection of abnormalities attributable to short-circuiting of the wires for the first and second torque signals Tmain and Tsub to the ground or power supply. Also, when either of the torque signals Tmain and Tsub is out of a given voltage range, the torque sensor abnormality detector 101 judges that signal to be abnormal, thus allowing control continuation with the use of the other torque signal.

The external device 1-2 includes only an excessive torque detector 102C. The excessive torque detector 102C receives the first and second torque signals Tmain and Tsub and the vehicle speed signal 14. Similar to the excessive torque detector 102B of FIG. 22, the excessive torque detector 102C inspects both of the first and second torque signals Tmain and Tsub for abnormality detection. The excessive torque detector 102C detects an abnormality of the main microcomputer 1-1 only when an excessive steering force (torque) is applied with the operation of the torque sensor 2 being normal; the abnormality detection causes the motor 6 to stop.

The excessive torque detector 102C can vary the threshold values Tmmax2 and Tmmin2 based on the vehicle speed signal 14. As illustrated in FIG. 19(A), the range of Tmmax2 to Tmmin2 is widened when the vehicle speed is low, so that a larger steering force can be judged normal. Conversely, when the vehicle speed is high, the range of Tmmax2 to Tmmin2 is narrowed as illustrated in FIG. 19(B), so that a smaller steering force can be judged abnormal.

As above, the sixth example allows detection of abnormalities of the torque sensor 2 and abnormalities of the main microcomputer 1-1 in a distinguishable manner; thus, appropriate system control is possible even when the operation of the torque sensor 2 is abnormal.

Moreover, the range with which to detect excessive torque can be varied based on the vehicle speed. At low speed when a large steering force is required, the driver is allowed to apply a large steering force. At high speed when a large steering force is not necessary, abnormalities can be detected more reliably.

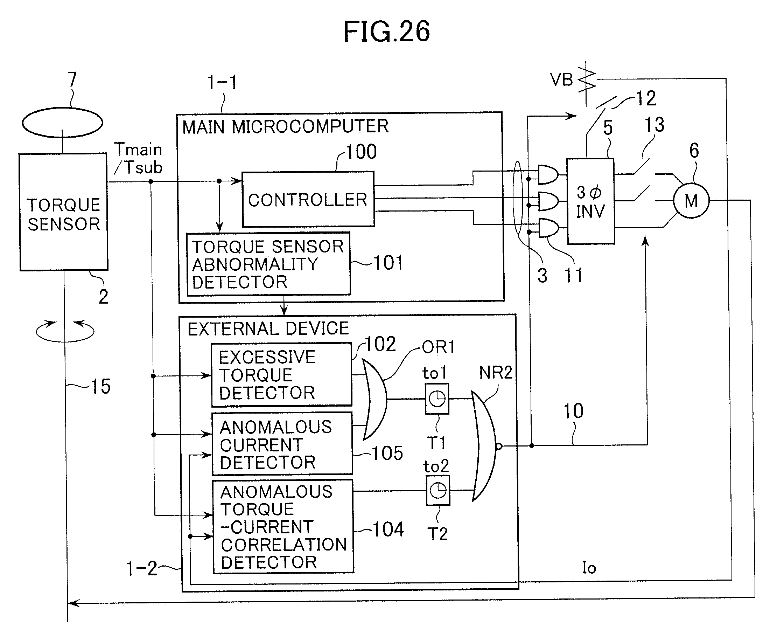

Described next with reference to FIG. 26 are the configuration and operation of an electric power steering controller according to a seventh example which is useful for understanding the invention. FIG. 26 is a block diagram illustrating the configuration of an electric power steering system with the steering controller of the seventh example. In FIG. 26, the same reference numerals as those used in FIG. 1 denote identical components.

The seventh example is designed such that the external device 1-2 stops current supply to the motor 6 after a possible abnormal state has lasted for a given amount of time. Thus, the external device 1-2 of the seventh example includes the following components: an OR circuit OR1 for performing an OR operation on the outputs from the excessive torque detector 102 and from the anomalous current detector 105; a timer circuit T1, connected to the output of the OR circuit OR1, for measuring a fixed time t01; a timer circuit T2, connected to the output of the anomalous torque-current correlation detector 104, for measuring a fixed time t02; and a NOR circuit NR1, connected to the outputs of the timer circuits T1 and T2, for performing a NOR operation on the outputs from the timer circuits T1 and T2.

Thus thus-constructed external device 1-2 stops current supply to the motor 6 1) if the abnormality detection by the excessive torque detector 102 or by the anomalous current detector 105 has lasted for more than the fixed time t01 or 2) if the abnormality detection by the anomalous torque-current correlation detector 104 has lasted for more than the fixed time t02. The above first condition 1) is based on the consideration of a possible case where the driver may release his hands from the steering wheel 7 after applying a steering force with the intention of stopping self-steering.

The reason the two timer circuits T1 and T2 are provided is that the abnormality detection by the excessive torque detector 102 or by the anomalous current detector 105 and the abnormality detection by the anomalous torque-current correlation detector 104 are different events. The fixed time t01 may be the same in length as the fixed time t02.

It is also possible to set the time t01 based on the magnitude of the steering force (torque) detected by the excessive torque detector 102. For instance, the time t01 can be several seconds when the steering force is 10 Nm, which is larger than a normal steering force of 2-3 Nm. When the steering force exceeds 25 Nm, which is equivalent to the steering force (torque) required to generate the largest rack propulsion, the time t01 can be set to several milliseconds by taking into consideration the time required for rack-end protection.

As above, the seventh example allows detection of abnormalities of the torque sensor 2 and abnormalities of the main microcomputer 1-1 in a distinguishable manner; thus, appropriate system control is possible even when the operation of the torque sensor 2 is abnormal.

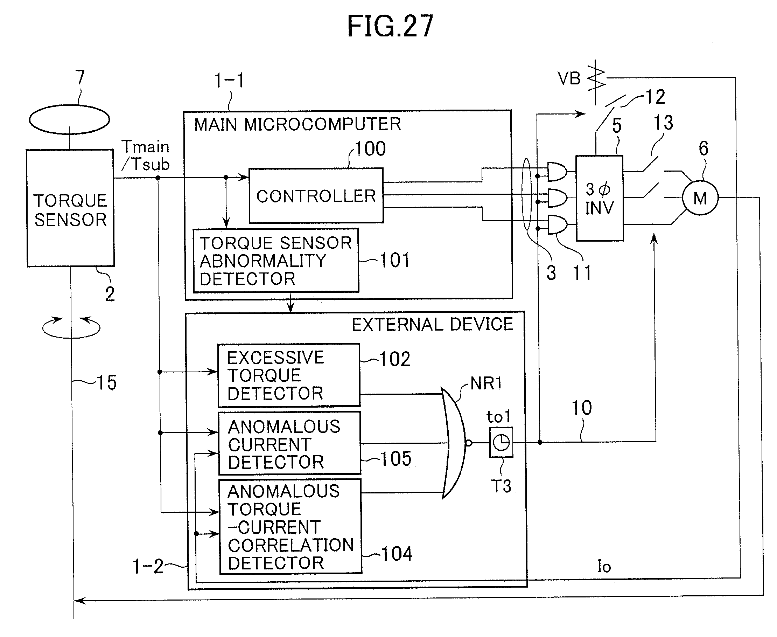

Described next with reference to FIG. 27 are the configuration and operation of an electric power steering controller according to Embodiment 1 of the invention. FIG. 27 is a block diagram illustrating the configuration of an electric power steering system with the steering controller of Embodiment 1. In FIG. 27, the same reference numerals as those used in FIG. 1 denote identical components.

Embodiment 1 is designed such that the external device 1-2 stops current supply to the motor 6 if the abnormality detection by either of the excessive torque detector 102, the anomalous current detector 105, and the anomalous torque-current correlation detector 104 has lasted for more than the fixed time t01. This condition is based on the consideration of a possible case where the driver's release of his hands from the steering wheel 7 may result in the application of torque to the torque sensor 2 due to the inertia of the steering wheel 7. Therefore, the external device 1-2 includes the following components: a NOR circuit NR2 for performing a NOR operation on the outputs from the excessive torque detector 102, the anomalous current detector 105, and the anomalous torque-current correlation detector 104; and a timer circuit T3, connected to the output of the NOR circuit NR2, for measuring the fixed time t01.

As above, Embodiment 1 allows detection of abnormalities of the torque sensor 2 and abnormalities of the main microcomputer 1-1 in a distinguishable manner; thus, appropriate system control is possible even when the operation of the torque sensor 2 is abnormal.

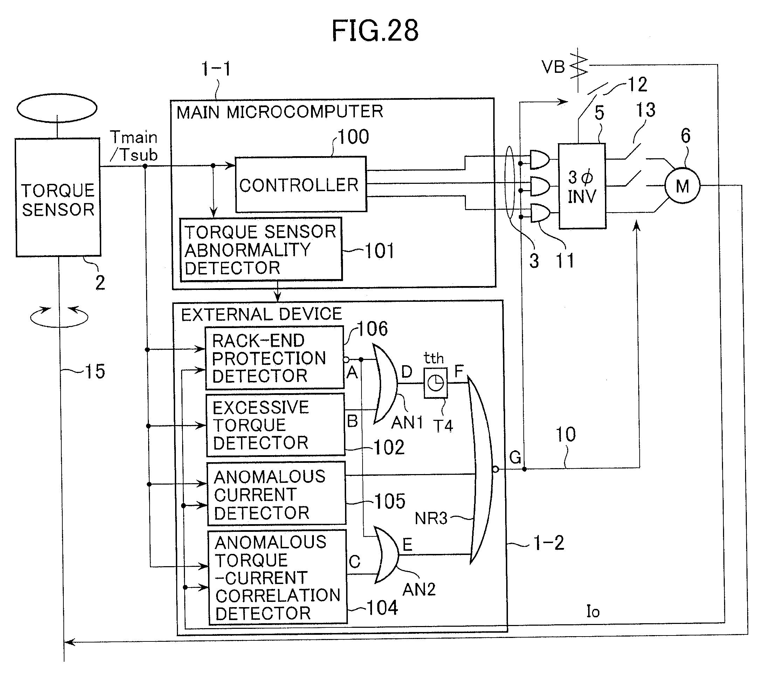

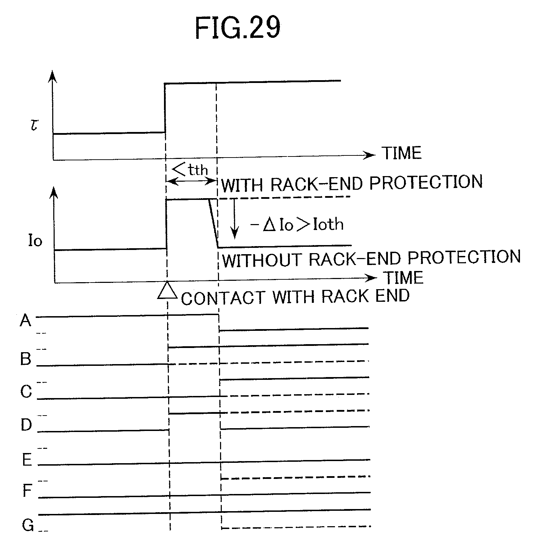

Described next with reference to FIGS. 28 and 29 are the configuration and operation of an electric power steering controller according to Embodiment 2 of the invention. FIG. 28 is a block diagram illustrating the configuration of an electric power steering system with the steering controller of Embodiment 2. In FIG. 28, the same reference numerals as those used in FIG. 1 denote identical components. FIG. 29 is a timing chart illustrating the operation of the power steering controller of Embodiment 2.

As illustrated in FIG. 28, the external device 1-2 of Embodiment 2 includes a rack-end protection detector 106 in addition to the components of the external device 1-2 of FIG. 1. Even if the excessive torque detector 102 has detected an abnormality resulting from a large steering force (torque), the rack-end protection detector 106 prevents discontinuation of current supply to the motor 6, provided that the rack-end protection detector 106 has detected a rack-end protection operation by the main microcomputer 1-1 (decrease in Io by more than Ioth) within a given time frame tth.

Thus, the external device 1-2 of Embodiment 2 further includes the following components: an AND circuit AN1 for performing an AND operation on the inverted output from the rack-end protection detector 106 and the output from the excessive torque detector 102; a timer circuit T4, connected to the output of the AND circuit AN1, for measuring the time tth; an AND circuit AN2 for performing an AND operation on the inverted output from the rack-end protection detector 106 and the output from the anomalous torque-current correlation detector 104; and a NOR circuit NR3 for performing an NOR operation on the outputs from the timer circuit T4, the anomalous current detector 105, and the AND circuit AN2.

FIG. 29 is a timing chart illustrating the operation of the power steering controller of Embodiment 2, where 'τ' denotes the steering force, and 'Io' denotes the motor drive current. Further, the reference character 'A' denotes the inverted output from the rack-end protection detector 106, 'B' the output from the excessive torque detector 102, 'C' the output from the anomalous torque-current correlation detector 104, 'D' the output from the AND circuit AN1, 'E' the output from the AND circuit AN2, 'F' the output from the timer circuit T4, and 'G' the output from the NOR circuit NOR3.

In FIG. 29, the solid lines represent signals obtained when a rack-end protection operation is performed whereas the dashed lines represent signals obtained when a rack-end protection operation is not performed.

Rack-end protection is performed by the controller 100. The controller 100 monitors motor drive signals 3. When the motor drive current Io keeps exceeding a given value for a given amount of time, the controller 100 regards this as the contact of the pinion gear with either end of the rack (hereinafter referred to simply as 'rack-end contact') and then performs rack-end protection by reducing the motor drive current Io by more than Ioth.

When the steering force (torque) exceeds a given value due to the rack-end contact, the excessive torque detector 102 regards this as abnormal and makes its output B high. After the rack-end protection detector 106 detects the rack-end protection performed by the controller 100, its output A becomes high. During this time, the output D of the AND circuit AN1 becomes also high. If the rack-end protection is detected within the time frame tth, the output F of the timer circuit T4 does not become high, and the output G of the NOR circuit NOR3 stays high, thereby not stopping the operation of the motor 6.

Further, since the correlation between the steering force and the motor drive current is disrupted right after the start of the rack-end protection by the main microcomputer 1-1, the anomalous torque-current correlation detector 104 regards this as abnormal, making its output C high. In this case, too, the output A becomes high. Thus, the output E of the AND circuit AN2 stays low, and the output G of the NOR circuit NOR3 stays high, thereby not stopping the operation of the motor 6.

If a larger steering force (torque) than a given threshold value is attributed not to rack-end contact but to an abnormality of power steering control, the rack-end protection detector 106 does not detect rack-end protection. Thus, even after the time frame tth has passed, the output D of the AND circuit AN1 remains high as illustrated by the dashed line. Also, the output F of the timer circuit T4 becomes high, and the output G of the NOR circuit NOR3 becomes low, thereby stopping the operation of the motor 6.

Conventionally, a power steering system does not distinguish between an excessive steering force exerted by the driver and a transient impact in the event of rack-end contact. When the driver turns the steering wheel right or left up to the limit, an impact is caused at the rack end. If the system misjudges this impact as an excessive steering force exerted by the driver, the system brings its power steering control to an emergency stop even when the system operates properly. Subsequently, drivability will be affected for lack of steering assistance.

Methods for detecting rack-end contact and mitigating its associated impact are disclosed in Japanese Laid-open Unexamined Applications No. 2008-260421, No. 2009-220735, and No. 2008-137492, for example. These methods, however, are based on the assumption that the driver will not apply an excessive steering force intentionally. Thus, under these methods, it is difficult to distinguish between an excessive steering force intended by the driver and an excessive steering force resulting from a rack-end impact.

In contrast, the external device 1-2 of Embodiment 2 includes the rack-end protection detector 106 so as not to regard a steering force larger than a given value as an excessive steering force in the event of rack-end contact. When a steering force larger than a given value is applied, the rack-end protection detector 106 regards a decrease in the motor drive current Io within a given time frame as the rack-end protection performed by the main microcomputer 1-1. The rack-end protection detector 106 judges whether or not the operation of the main microcomputer 1-1 is abnormal by examining whether or not the main microcomputer 1-1 is performing a rack-end protection operation. When a steering force larger than a given value is applied with the main microcomputer 1-1 performing no rack-end protection, it is determined that the lager steering force is not due to rack-end contract. Instead, the larger steering force is regarded as an abnormality of electric power steering control, that is, an abnormality of the main microcomputer 1-1. Even if the larger steering force has actually resulted from rack-end contact, the larger steering force can be regarded as an abnormality of the main microcomputer 1-1 when the main microcomputer 1-1 is not performing a rack-end protection operation.

As above, Embodiment 2 allows detection of abnormalities of the torque sensor 2 and abnormalities of the main microcomputer 1-1 in a distinguishable manner; thus, appropriate system control is possible even when the operation of the torque sensor 2 is abnormal.

Moreover, Embodiment 2 makes it possible to distinguish between an excessive steering force intended by the driver and an excessive steering force resulting from a rack-end impact. When an excessive steering force does not result from a rack-end impact, a rack-end protection operation can be performed.

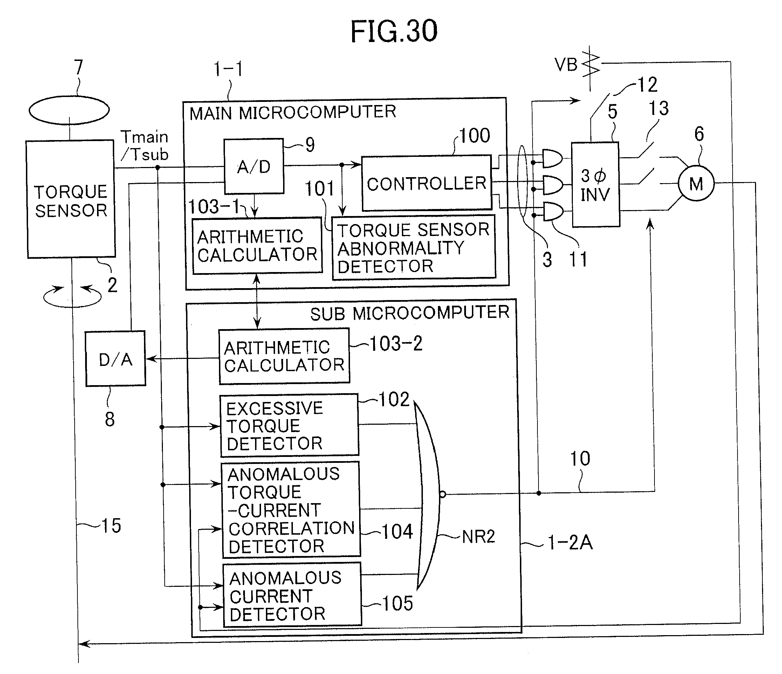

Described next with reference to FIG. 30 are the configuration and operation of an electric power steering controller according to an eighth example which is useful for understanding the invention. FIG. 30 is a block diagram illustrating the configuration of an electric power steering system with the steering controller of the eighth example. In FIG. 30, the same reference numerals as those used in FIG. 1 denote identical components.

The power steering controller of the eighth example includes an external device 1-2A. The external device 1-2A is a sub-microcomputer for monitoring the main microcomputer 1-1. The main microcomputer 1-1 and the external device 1-2A include an arithmetic calculator 103-1 and an arithmetic calculator 103-2, respectively. The arithmetic calculator 103-1 instructs the arithmetic calculator 103-2 to perform a simple arithmetic calculation and compares the calculation result of the arithmetic calculator 103-2 against its own calculation result, thereby making sure the external device 1-2A is working properly. The arithmetic calculator 103-2 also does the same to the arithmetic calculator 103-1. Thus, the functions of the arithmetic calculators 103-1 and 103-2 are cross-checked on an as-needed basis.

It is also possible to check the operation of an AD converter 9 installed within the main microcomputer 1-1. This is achieved by the arithmetic calculator 103-2 instructing a DA converter 8 to output an analog signal to the AD converter 9 and then the arithmetic calculator 103-1 checking a signal from the AD converter 9.

As above, the eighth example allows detection of abnormalities of the torque sensor 2 and abnormalities of the main microcomputer 1-1 in a distinguishable manner; thus, appropriate system control is possible even when the operation of the torque sensor 2 is abnormal.

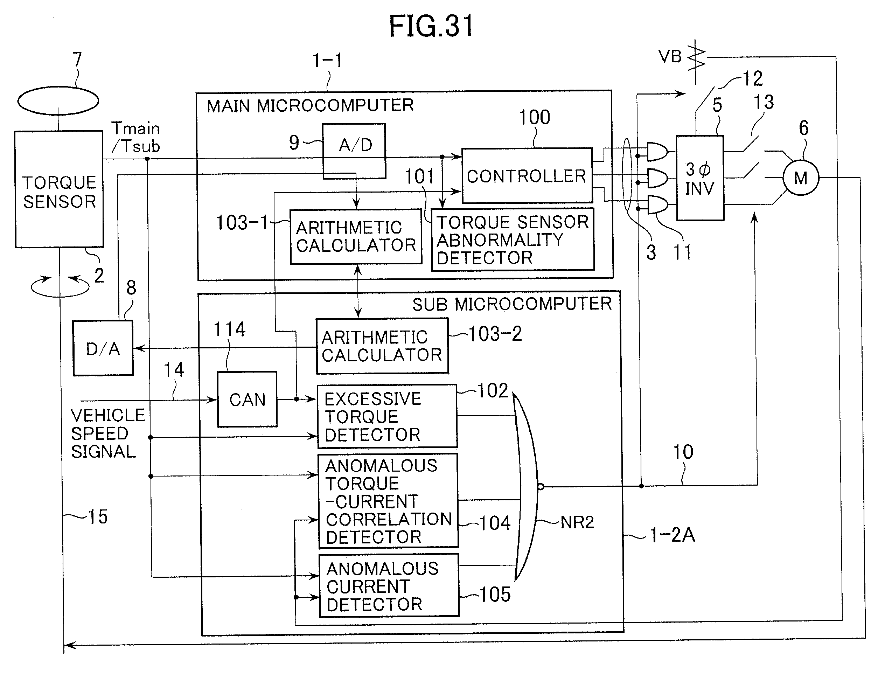

Described next with reference to FIG. 31 are the configuration and operation of an electric power steering controller according to a ninth example which is useful for understanding the invention. FIG. 31 is a block diagram illustrating the configuration of an electric power steering system with the steering controller of the ninth example. In FIG. 31, the same reference numerals as those used in FIG. 1 denote identical components.

In the ninth example, the external device (sub-microcomputer) 1-2A includes a CAN (Controller Area Network) interface 114. The CAN interface receives a vehicle speed signal 14 and transmits the signal 14 to the main microcomputer 1-1. It is preferred that the transmission of the signal 14 to the main microcomputer 1-1 be through a simple circuit interface such as an SPI (Serial Port Interface) and the like.

As above, the ninth example allows detection of abnormalities of the torque sensor 2 and abnormalities of the main microcomputer 1-1 in a distinguishable manner; thus, appropriate system control is possible even when the operation of the torque sensor 2 is abnormal.

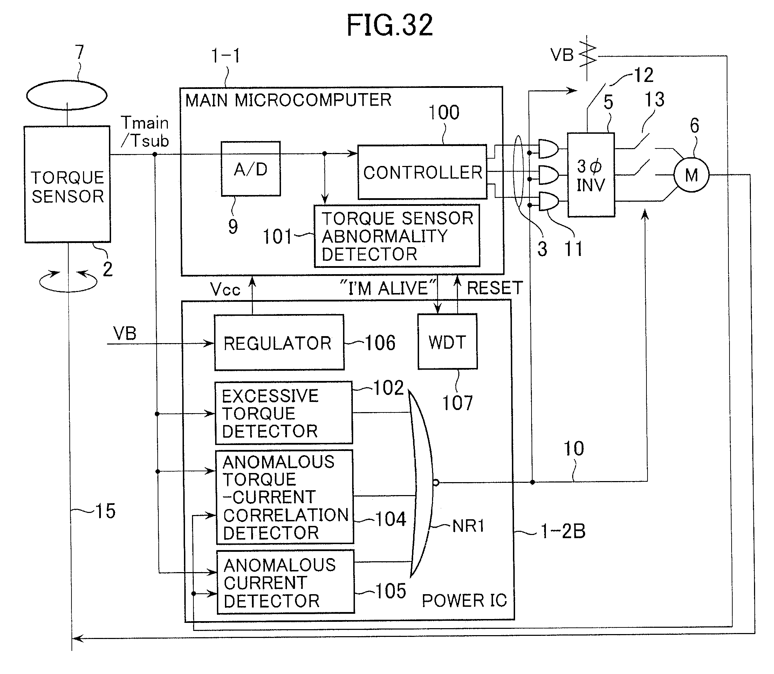

Described next with reference to FIG. 32 are the configuration and operation of an electric power steering controller according to a tenth example which is useful for understanding the invention. FIG. 32 is a block diagram illustrating the configuration of an electric power steering system with the steering controller of the tenth example. In FIG. 32, the same reference numerals as those used in FIG. 1 denote identical components.

The power steering controller of the tenth example includes an external device 1-2B. The external device 1-2B is implemented by a power IC and includes the following components: a regulator 106 for supplying power to the main microcomputer 1-1; and a watchdog timer 107 for transmitting a RESET signal to the main microcomputer 1-1 when the power is turned on or when the main microcomputer 1-1 has not transmitted an "I'm alive" signal for a given amount of time.

As above, the tenth example allows detection of abnormalities of the torque sensor 2 and abnormalities of the main microcomputer 1-1 in a distinguishable manner; thus, appropriate system control is possible even when the operation of the torque sensor 2 is abnormal.

The above-described embodiments of the invention allow detection of abnormalities of a main microcomputer without any misdetection in the event of torque-sensor abnormalities or rack-end contact and also without requiring any special components for the main microcomputer. Moreover, the invention makes it possible to detect not only abnormalities of the main microcomputer but abnormalities of an inverter predriver and an inverter and bugs of control software as well.

## Claims

1. An electric power steering controller comprising:
a main microcomputer (1-1) including:
a controller (100) which outputs motor drive signals (3) to a drive circuit (5) based on first and second torque signals (Tmain, Tsub), the drive circuit (5) being adapted to drive a motor (6) that generates assistive torque, the first and second torque signals (Tmain, Tsub) being output from at least one torque sensor (2, 2') used to detect steering force; and
a torque sensor abnormality detector (101) which detects an abnormality of the torque sensor (2, 2') based on the first and second torque signals (Tmain, Tsub); wherein the electric power steering controller is **characterized by** further comprising
an external device (1-2) connected to the main microcomputer (1-1), the external device (1-2) including an excessive torque detector (102) which detects a torque that is larger than a first threshold value using either one of the first and second torque signals (Tmain, Tsub) and which outputs a motor stop signal when the used signal indicates that the torque is larger than the first threshold value;
wherein the external device (1-2) further includes an anomalous current detector (105) for detecting anomalous current using either one of the first and second torque signals (Tmain, Tsub) and for outputting a motor stop signal when a current that flows through the motor (6) exceeds a given current value with the used signal being close to zero,
wherein the external device (1-2) further includes a rack-end protection detector (106) for detecting activation of a rack-end protection when either one of the first and second torque signals (Tmain, Tsub) indicate that a torque is larger than the first threshold value and the amount of a decrease in the current flowing through the motor (6) within a given time frame is larger than a given second threshold value, and
wherein the operation of the motor (6) is continued when the rack-end protection detector (106) has detected the activation of the rack-end protection, regardless of whether the anomalous current detector (105) has detected an anomalous current or not.

2. The electric power steering controller of claim 1 wherein the external device further includes an anomalous torque-current correlation detector (104) for monitoring the correlation between either one of the first and second torque signal (Tmain, Tsub) and a current that flows through the motor (6) and for outputting a motor stop signal when the correlation is disrupted.

3. The electric power steering controller of at least one of claims 1 to 2 wherein the current that flows through the motor (6) is a total current that flows through the motor (6) or comprises phase currents when the motor is a three-phase motor.

4. The electric power steering controller of at least one of claims 1 to 3 wherein the motor stop signal is generated by stopping the main microcomputer (1-1) from transmitting the motor drive signals (3), by stopping power supply to the drive circuit (5), or by relay disconnection between the drive current (5) and the motor (6).

5. The electric power steering controller of at least one of claims 1 to 4 wherein the external device (1-2) is a sub-microcomputer designed to monitor the operation of the main microcomputer (1-1).

6. The electric power steering controller of at least one of claims 1 to 4 wherein the external device (1-2) is a power IC designed to supply power to the main microcomputer (1-1) and transmit reset signals to the main microcomputer (1-1).

7. The electric power steering controller of at least one of claims 1 to 6,
wherein the torque sensor (2, 2') includes first and second sensor units (2A, 2B) each designed to detect the steering force,
wherein the torque sensor abnormality detector (101) detects abnormalities of the first and second sensor units (2A, 2B) when the difference between the sum of the first and second torque signals (Tmain, Tsub) and a given value exceeds a given error value, and
wherein, based on the detection of the abnormalities of the first and second sensor units (2A, 2B), the main microcomputer (1-1) gradually reduces output torque generated from the motor (6).

8. The electric power steering controller of at least one of claims 1 to 6,
wherein the torque sensor (2, 2') includes first and second sensor units (2A, 2B) each designed to detect the steering force,
wherein the torque sensor abnormality detector (101) detects an abnormality when the first torque signal (Tmain) is out of a given voltage range, the detection of the abnormality being followed by the main microcomputer (1-1) continuing the control of the motor (6) with the use of the second torque signal (Tsub), and
wherein the torque sensor abnormality detector (101) detects an abnormality when the second torque signal (Tsub) is out of a given voltage range, the detection of the abnormality being followed by the main microcomputer (1-1) continuing the control of the motor (6) with the use of the first torque signal (Tmain).

9. The electric power steering controller of at least one of claims 1 to 8 wherein the excessive torque detector (102) varies the threshold value based on vehicle speed such that the threshold value is larger at low speed than at high speed.

10. The electric power steering controller of at least one of claims 1 to 9,
wherein the excessive torque detector (102) receives both of the first and second torque signals (Tmain, Tsub), and
wherein the excessive torque detector (102) outputs a motor stop signal when the first torque signal (Tmain) is indicative of a torque larger than a threshold value or when the second torque signal (Tsub) is indicative of a torque larger than a threshold value.

11. The electric power steering controller of at least one of claims 1 to 10 wherein the external device (1-2) outputs a motor stop signal when a possible abnormal state has lasted for a given amount of time.

12. An electric power steering system comprising:
a torque sensor (2, 2') which detects steering force and outputs first and second torque signals (Tmain, Tsub);
a main microcomputer (1-1) including:
a controller (100) which outputs motor drive signals based on the first and second torque signals (Tmain, Tsub); and
a torque sensor abnormality detector (101) which detects an abnormality of the torque sensor (2, 2') based on the first and second torque signals (Tmain, Tsub);
a drive circuit (5) which outputs motor drive current based on the motor drive signals (3);
a motor (6), driven by the motor drive current (Io), for generating assistive torque; wherein the electric power steering system is **characterized by** further comprising
an external device (1-2) connected to the main microcomputer (1-1), the external device (1-2) including an excessive torque detector (102) which detects a torque that is larger than a first threshold value using either one of the first and second torque signals (Tmain, Tsub) and which outputs a motor stop signal when the used signal indicates that the torque is larger than the first threshold value;
wherein the external device (1-2) further includes an anomalous current detector (105) for detecting anomalous current using either one of the first and second torque signals (Tmain, Tsub) and for outputting a motor stop signal when a current that flows through the motor (6) exceeds a given current value with the used signal being close to zero,
wherein the external device (1-2) further includes a rack-end protection detector (106) for detecting activation of a rack-end protection when either one of the first and second torque signals (Tmain, Tsub) indicate that a torque is larger than the first threshold value and the amount of a decrease in the current flowing through the motor (6) within a given time frame is larger than a given second threshold value, and
wherein the operation of the motor (6) is continued when the rack-end protection detector (106) has detected the activation of the rack-end protection, regardless of whether the anomalous current detector (105) has detected an anomalous current or not.

## Patentansprüche

1. Elektrische Servolenkungssteuereinheit, die Folgendes umfasst:
einen Haupt-Mikrocomputer (1-1), der Folgendes enthält:
eine Steuereinheit (100), die basierend auf einem ersten und einem zweiten Drehmomentsignal (Tmain, Tsub) Motorantriebssignale (3) an eine Antriebsschaltung (5) ausgibt, wobei die Antriebsschaltung (5) dafür ausgelegt ist, einen Motor (6) anzutreiben, der ein unterstützendes Drehmoment erzeugt, wobei das erste und das zweite Drehmomentsignal (Tmain, Tsub) von mindestens einem Drehmomentsensor (2, 2') ausgegeben werden, der verwendet wird, um eine Lenkkraft zu detektieren; und
einen Drehmomentsensor-Anomaliedetektor (101), der basierend auf dem ersten und dem zweiten Drehmomentsignal (Tmain, Tsub) eine Anomalie des Drehmomentsensors (2, 2') detektiert; wobei die elektrische Servolenkungssteuereinheit **gekennzeichnet ist durch**:
eine äußere Vorrichtung (1-2), die mit dem Haupt-Mikrocomputer (1-1) verbunden ist, wobei die äußere Vorrichtung (1-2) einen Detektor (102) für ein überhöhtes Drehmoment enthält, der unter Verwendung des ersten oder des zweiten Drehmomentsignals (Tmain, Tsub) ein Drehmoment detektiert, das größer ist als ein erster Schwellwert, und der ein Motorhaltesignal ausgibt, wenn das verwendete Signal anzeigt, dass das Drehmoment größer als der erste Schwellwert ist;
wobei die äußere Vorrichtung (1-2) ferner einen Detektor (105) für anomalen Strom enthält, um unter Verwendung des ersten oder des zweiten Drehmomentsignals (Tmain, Tsub) einen anomalen Strom zu detektieren und um ein Motorhaltesignal auszugeben, wenn ein **durch** den Motor (6) fließender Strom einen vorgegebenen Stromwert überschreitet, wobei das verwendete Signal annähernd null ist,
wobei die äußere Vorrichtung (1-2) ferner einen Detektor (106) für den Schutz des Zahnstangenendes enthält, um eine Aktivierung des Schutzes des Zahnstangenendes zu detektieren, wenn das erste oder das zweite Drehmomentsignal (Tmain, Tsub) anzeigt, dass ein Drehmoment größer als der erste Schwellwert ist und die Stärke eines Abfalls des **durch** den Motor (6) fließenden Stroms in einem vorgegebenen Zeitrahmen größer als ein vorgegebener zweiter Schwellwert ist, und
wobei der Betrieb des Motors (6) fortgesetzt wird, wenn der Detektor (106) für den Schutz des Zahnstangenendes die Aktivierung des Schutzes des Zahnstangenendes detektiert hat, unabhängig davon, ob der Detektor (105) für anomalen Strom einen anomalen Strom detektiert hat oder nicht.

2. Elektrische Servolenkungssteuereinheit nach Anspruch 1, wobei die äußere Vorrichtung ferner einen Detektor (104) für eine anomale Drehmoment-Strom-Korrelation enthält, um die Korrelation zwischen dem ersten oder dem zweiten Drehmomentsignal (Tmain, Tsub) und einem durch den Motor (6) fließenden Strom zu überwachen, und um ein Motorhaltesignal auszugeben, wenn die Korrelation gestört ist.

3. Elektrische Servolenkungssteuereinheit nach mindestens einem der Ansprüche 1 bis 2, wobei der durch den Motor (6) fließende Strom ein durch den Motor (6) fließender Gesamtstrom ist oder Phasenströme umfasst, wenn der Motor ein Dreiphasenmotor ist.

4. Elektrische Servolenkungssteuereinheit nach mindestens einem der Ansprüche 1 bis 3, wobei das Motorhaltesignal dadurch erzeugt wird, dass der Haupt-Mikrocomputer (1-1) davon abgehalten wird, die Motorantriebssignale (3) zu übertragen, dass die Stromversorgung für die Antriebsschaltung (5) unterbrochen wird oder dass das Relais zwischen der Antriebsschaltung (5) und dem Motor (6) abgeschaltet wird.

5. Elektrische Servolenkungssteuereinheit nach mindestens einem der Ansprüche 1 bis 4, wobei die äußere Vorrichtung (1-2) ein Unter-Mikrocomputer ist, der dafür ausgelegt ist, den Betrieb des Haupt-Mikrocomputers (1-1) zu überwachen.

6. Elektrische Servolenkungssteuereinheit nach mindestens einem der Ansprüche 1 bis 4, wobei die äußere Vorrichtung (1-2) einer integrierten Leistungsschaltung (IC) entspricht, die dafür ausgelegt ist, den Haupt-Mikrocomputer (1-1) mit Strom zu versorgen und Rücksetzsignale an den Haupt-Mikrocomputer (1-1) zu übertragen.

7. Elektrische Servolenkungssteuereinheit nach mindestens einem der Ansprüche 1 bis 6,
wobei der Drehmomentsensor (2, 2') eine erste und eine zweite Sensoreinheit (2A, 2B) enthält, die jeweils dafür ausgelegt sind, die Lenkkraft zu detektieren,
wobei der Drehmomentsensor-Anomaliedetektor (101) Anomalien der ersten und der zweiten Sensoreinheit (2A, 2B) detektiert, wenn die Differenz zwischen der Summe des ersten und des zweiten Drehmomentsignals (Tmain, Tsub) und einem vorgegebenen Wert einen vorgegebenen Fehlerwert überschreitet, und
wobei der Haupt-Mikrocomputer (1-1) basierend auf der Detektion der Anomalien der ersten und der zweiten Sensoreinheit (2A, 2B) das Ausgangsdrehmoment, das vom Motor (6) erzeugt wird, schrittweise verringert.

8. Elektrische Servolenkungssteuereinheit nach mindestens einem der Ansprüche 1 bis 6,
wobei der Drehmomentsensor (2, 2') eine erste und eine zweite Sensoreinheit (2A, 2B) enthält, die jeweils dafür ausgelegt sind, die Lenkkraft zu detektieren,
wobei der Drehmomentsensor-Anomaliedetektor (101) eine Anomalie detektiert, wenn das erste Drehmomentsignal (Tmain) außerhalb eines vorgegebenen Spannungsbereichs liegt, wobei der Haupt-Mikrocomputer, der die Steuereinheit des Motors (6) unter Verwendung des zweiten Drehmomentsignals (Tsub) fortsetzt, der Detektion der Anomalie folgt, und
wobei der Drehmomentsensor-Anomaliedetektor (101) eine Anomalie detektiert, wenn das zweite Drehmomentsignal (Tsub) außerhalb eines vorgegebenen Spannungsbereichs liegt, wobei der Haupt-Mikrocomputer, der die Steuereinheit des Motors (6) unter Verwendung des ersten Drehmomentsignals (Tmain) fortsetzt, der Detektion der Anomalie folgt.

9. Elektrische Servolenkungssteuereinheit nach mindestens einem der Ansprüche 1 bis 8, wobei der Detektor (102) für ein überhöhtes Drehmoment den Schwellwert basierend auf der Fahrzeuggeschwindigkeit derart variiert, dass der Schwellwert bei niedriger Geschwindigkeit größer als bei hoher Geschwindigkeit ist.

10. Elektrische Servolenkungssteuereinheit nach mindestens einem der Ansprüche 1 bis 9,
wobei der Detektor (102) für ein überhöhtes Drehmoment sowohl das erste als auch das zweite Drehmomentsignal (Tmain, Tsub) empfängt, und
wobei der Detektor (102) für ein überhöhtes Drehmoment ein Motorhaltesignal ausgibt, wenn das erste Drehmomentsignal (Tmain) ein Drehmoment anzeigt, das größer als ein Schwellwert ist oder wenn das zweite Drehmomentsignal (Tsub) ein Drehmoment anzeigt, das größer als ein Schwellwert ist.

11. Elektrische Servolenkungssteuereinheit nach mindestens einem der Ansprüche 1 bis 10, wobei die äußere Vorrichtung (1-2) ein Motorhaltesignal ausgibt, wenn ein möglicher anomaler Zustand für eine vorgegebene Zeitdauer angehalten hat.

12. Elektrische Servolenkungssystem, das Folgendes umfasst:
einen Drehmomentsensor (2, 2'), der Lenkkraft detektiert und ein erstes und ein zweites Drehmomentsignal (Tmain, Tsub) ausgibt;
einen Haupt-Mikrocomputer (1-1), der Folgendes umfasst:
eine Steuereinheit (100), die basierend auf dem ersten und zweiten Drehmomentsignal (Tmain, Tsub) Motorantriebssignale ausgibt; und
einen Drehmomentsensor-Anomaliedetektor (101), der basierend auf dem ersten und zweiten Drehmomentsignal (Tmain, Tsub) eine Anomalie des Drehmomentsensors (2, 2') detektiert;
eine Antriebsschaltung (5), die basierend auf den Motorantriebssignalen (3) einen Motorantriebsstrom ausgibt;
einen Motor (6), der von dem Motorantriebsstrom (Io) angetrieben wird, um ein unterstützendes Drehmoment zu erzeugen; wobei das elektrische Servolenkungssystem **gekennzeichnet ist durch**:
eine äußere Vorrichtung (1-2), die mit dem Haupt-Mikrocomputer (1-1) verbunden ist, wobei die äußere Vorrichtung (1-2) einen Detektor (102) für ein überhöhtes Drehmoment enthält, der unter Verwendung des ersten oder des zweiten Drehmomentsignals (Tmain, Tsub) ein Drehmoment detektiert, das größer als ein erster Schwellwert ist, und der ein Motorhaltesignal ausgibt, wenn das verwendete Signal anzeigt, dass das Drehmoment größer als der erste Schwellwert ist;
wobei die äußere Vorrichtung (1-2) ferner einen Detektor (105) für anomalen Strom enthält, um unter Verwendung des ersten oder des zweiten Drehmomentsignals (Tmain, Tsub) einen anomalen Strom zu detektieren und um ein Motorhaltesignal auszugeben, wenn ein **durch** den Motor (6) fließender Strom einen vorgegebenen Stromwert überschreitet, wobei das verwendete Signal annähernd Null ist,
wobei die äußere Vorrichtung (1-2) ferner einen Detektor (106) für den Schutz des Zahnstangenendes enthält, um eine Aktivierung des Schutzes des Zahnstangenendes zu detektieren, wenn das erste oder das zweite Drehmomentsignal (Tmain, Tsub) anzeigt, dass ein Drehmoment größer als der erste Schwellwert ist und die Stärke eines Abfalls des **durch** den Motor (6) fließenden Stroms in einem vorgegebenen Zeitrahmen größer als ein vorgegebener zweiter Schwellwert ist, und
wobei der Betrieb des Motors (6) fortgesetzt wird, wenn der Detektor (106) für den Schutz des Zahnstangenendes die Aktivierung des Schutzes des Zahnstangenendes detektiert hat, unabhängig davon, ob der Detektor (105) für anomalen Strom einen anomalen Strom detektiert hat oder nicht.

## Revendications

1. Contrôleur de direction assistée électrique comprenant :
un micro-ordinateur principal (1-1) incluant : un contrôleur (100) qui délivre des signaux de pilotage moteur (3) à un circuit pilote (5) sur la base d'un premier et d'un second signal de couple (Tmain, Tsub), le circuit pilote (5) étant adapté à piloter un moteur (6) qui génère un couple d'assistance, le premier et le second signal de couple (Tmain, Tsub) étant délivrés depuis au moins un capteur de couple (2, 2') utilisé pour détecter une force de direction ; et
un détecteur d'anomalie de capteur de couple (101) qui détecte une anomalie du capteur de couple (2, 2') sur la base du premier et du second signal de couple (Tmain, Tsub), dans lequel le contrôleur de direction assistée électrique est **caractérisé en ce qu'**il comprend en outre :
un dispositif externe (1-2) connecté au micro-ordinateur principal (1-1), le dispositif externe (1-2) incluant un détecteur de couple excessif (102) qui détecte un couple qui est plus grand qu'une première valeur seuil en utilisant l'un ou l'autre parmi le premier et le second signal de couple (Tmain, Tsub) et qui délivre un signal d'arrêt moteur quand le signal utilisé indique que le couple est plus grand que la première valeur seuil ;
dans lequel le dispositif externe (1-2) inclut en outre un détecteur de courant anormal (105) pour détecter un courant anormal en utilisant l'un ou l'autre parmi le premier et le second signal de couple (Tmain, Tsub) et pour délivrer un signal d'arrêt moteur quand un courant qui s'écoule à travers le moteur (6) excède une valeur de courant donné, le signal utilisé étant proche de zéro,
dans lequel le dispositif externe (1-2) inclut en outre un détecteur de protection (106) de fin de crémaillère pour détecter une activation d'une protection de fin de crémaillère lorsque que l'un ou l'autre parmi le premier et le second signal de couple (Tmain, Tsub) indique qu'un couple est plus grand que la première valeur seuil et que la valeur d'une diminution du courant qui s'écoule à travers le moteur (6) pendant une trame temporelle donnée est plus grande qu'une seconde valeur seuil donnée, et
dans lequel l'opération du moteur (6) est poursuivie quand le détecteur de protection de fin de crémaillère (106) a détecté l'activation de la protection de fin de crémaillère, indépendamment de savoir si le détecteur de courant anormal (105) a détecté un courant anormal ou non.

2. Contrôleur de direction assistée électrique selon la revendication 1, dans lequel le dispositif externe inclut en outre un détecteur de corrélation couple anormal/courant (104) pour surveiller la corrélation entre l'un ou l'autre parmi le premier et le second signal de couple (Tmain, Tsub) et un courant qui s'écoule à travers le moteur (6) et pour délivrer un signal d'arrêt moteur quand la corrélation est interrompue.

3. Contrôleur de direction assistée électrique selon l'une au moins des revendications 1 et 2, dans lequel le courant qui s'écoule à travers le moteur (6) est un courant total qui s'écoule à travers le moteur (6) ou comprend des courants de phase quand le moteur est un moteur triphasé.

4. Contrôleur de direction assistée électrique selon l'une au moins des revendications 1 à 3, dans lequel le signal d'arrêt moteur est généré en arrêtant la transmission des signaux de pilotage moteur (3) par le micro-ordinateur principal (1-1), en arrêtant l'alimentation de puissance au circuit pilote (5), ou par une déconnexion de relais entre le courant pilote (5) et le moteur (6).

5. Contrôleur de direction assistée électrique selon l'une au moins des revendications 1 à 4, dans lequel le dispositif externe (1-2) est un micro-ordinateur subalterne conçu pour surveiller le fonctionnement du micro-ordinateur principal (1-1).

6. Contrôleur de direction assistée électrique selon l'une au moins des revendications 1 à 4, dans lequel le dispositif externe (1-2) est un circuit intégré de puissance conçu pour alimenter une puissance au micro-ordinateur principal (1-1) et pour transmettre des signaux de remise à zéro au micro-ordinateur principal (1-1).

7. Contrôleur de direction assistée électrique selon l'une au moins des revendications 1 à 6,
dans lequel le capteur de couple (2, 2') inclut une première et une seconde unité de capteur (2A, 2B) conçues chacune pour détecter la force de direction,
dans lequel le détecteur d'anomalie de capteur de couple (101) détecte des anomalies de la première et de la seconde unité de capteur (2A, 2B) quand la différence entre la somme du premier et du second signal de couple (Tmain, Tsub) et une valeur donnée excède une valeur d'erreur donnée, et
dans lequel, en se basant sur la détection des anomalies de la première et de la seconde unité de capteur (2A, 2B), le micro-ordinateur principal (1-1) réduit graduellement le couple de sortie généré par le moteur (6).

8. Contrôleur de direction assistée électrique selon l'une au moins des revendications 1 à 6,
dans lequel le capteur de couple (2, 2') inclut une première et une seconde unité de capteur (2A, 2B) conçues chacune pour détecter la force de direction,
dans lequel le détecteur d'anomalie de capteur de couple (101) détecte une anomalie quand le premier signal de couple (Tmain) est hors d'une plage de voltage donnée, la détection de l'anomalie étant suivie par une poursuite de la commande du moteur (6) par le micro-ordinateur principal (1-1) en utilisant le second signal de couple (Tsub), et
dans lequel le détecteur d'anomalie de capteur de couple (101) détecte une anomalie quand le second signal de couple (Tsub) est hors d'une plage de voltage donnée, la détection de l'anomalie étant suivie par une poursuite de la commande du moteur (6) par le micro-ordinateur principal (1-1) en utilisant le premier signal de couple (Tmain).

9. Contrôleur de direction assistée électrique selon l'une au moins des revendications 1 à 8, dans lequel le détecteur de couple excessif (102) fait varier la valeur de seuil sur la base de la vitesse véhicule, de telle sorte que la valeur seuil est plus élevée à basse vitesse qu'à haute vitesse.

10. Contrôleur de direction assistée électrique selon l'une au moins des revendications 1 à 9,
dans lequel le détecteur de couple excessif (102) reçoit à la fois le premier et le second signal de couple (Tmain, Tsub), et
dans lequel le détecteur de couple excessif (102) délivre un signal d'arrêt moteur quand le premier signal de couple (Tmain) indique un couple plus élevé qu'une valeur seuil ou quand le second signal de couple (Tsub) indique un couple plus élevé qu'une valeur seuil.

11. Contrôleur de direction assistée électrique selon l'une au moins des revendications 1 à 10, dans lequel le dispositif externe (1-2) délivre un signal d'arrêt moteur quand un état anormal possible a duré pendant un temps donné.

12. Système de direction assistée électrique comprenant :
un capteur de couple (2, 2') qui détecte une force de direction et qui délivre un premier et un second signal de couple (Tmain, Tsub) ;
un micro-ordinateur principal (1-1) incluant :
un contrôleur (100) qui délivre des signaux de pilotage moteur sur la base du premier et du second signal de couple (Tmain, Tsub) ; et
un détecteur d'anomalie de capteur de couple (101) qui détecte une anomalie du capteur de couple (2, 2') sur la base du premier et du second signal de couple (Tmain, Tsub) ;
un circuit pilote (5) qui délivre un courant de pilotage moteur sur la base des signaux de pilotage moteur (3) ;
un moteur (6), entraîné par le courant de pilotage moteur (Io), afin de générer un couple d'assistance ; dans lequel le système de direction assistée électrique est **caractérisé en ce qu'**il comprend en outre un dispositif externe (1-2) connecté au micro-ordinateur principal (1-1), le dispositif externe (1-2) incluant un détecteur de couple excessif (102) qui détecte un couple qui est plus élevé qu'une première valeur seuil en utilisant l'un ou l'autre parmi le premier et le second signal de couple (Tmain, Tsub) et qui délivre un signal d'arrêt moteur quand le signal utilisé indique que le couplet plus élevé que la première valeur seuil ;
dans lequel le dispositif externe (1-2) inclut en outre un détecteur de courant anormal (105) pour détecter un courant anormal en utilisant l'un ou l'autre parmi le premier et le second signal de couple (Tmain, Tsub) et pour délivrer un signal d'arrêt moteur quand un courant qui s'écoule à travers le moteur (6) excède une valeur de courant donnée, alors que le signal utilisé est proche de zéro,
dans lequel le dispositif externe (1-2) inclut en outre un détecteur de protection de fin de crémaillère (106) pour détecter l'activation d'une protection de fin de crémaillère quand l'un ou l'autre parmi le premier et le second signal de couple (Tmain, Tsub) indique qu'un couple est plus élevé que la première valeur seuil et que la quantité d'une diminution du courant s'écoulant à travers le moteur (6) pendant une trame temporelle donnée est plus élevée qu'une seconde valeur seuil donnée, et
dans lequel le fonctionnement du moteur (6) est poursuivi quand le détecteur de protection de fin de crémaillère (106) a détecté l'activation de la protection de fin de crémaillère, indépendamment de savoir si le détecteur de courant anormal (105) a détecté un courant anormal ou non.
